(19) 

**Europäisches Patentamt**
**European Patent Office**
**Office européen des brevets**

(11) **EP 4 742 111 A1**

(12) **EUROPEAN PATENT APPLICATION**

(43) Date of publication:
**13.05.2026 Bulletin 2026/20**

(21) Application number: **25213478.8**

(22) Date of filing: **04.11.2025**

(51) International Patent Classification (IPC):
**G06N 10/20** (2022.01)   **G06N 10/60** (2022.01)
**G06N 10/40** (2022.01)

(52) Cooperative Patent Classification (CPC):
**G06N 10/60; G06N 10/20; G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.11.2024 JP 2024195147**

(71) Applicant: **FUJITSU LIMITED**
**Kawasaki-shi, Kanagawa 211-8588 (JP)**

(72) Inventor: **MATSUMOTO, Norifumi**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTING SUPPORT METHOD, AND INFORMATION PROCESSING APPARATUS**

(57)   An information processing apparatus expands an imaginary time evolution equation for calculating a thermal-equilibrium expectation value into equations of a plurality of degrees, generates sets of the degrees, and generates, for each set, a quantum circuit indicating quantum computation of a physical quantity value obtained by partial imaginary time evolution. A quantum computer is caused to repeatedly execute quantum computation based on the quantum circuit for each set. When doing so, a state in a stationary distribution of measurement results obtained by quantum computation based on a second quantum circuit corresponding to a second set is used as an input state at the start of quantum computation based on a first quantum circuit corresponding to a first set. The thermal-equilibrium expectation value of the physical quantity at the finite temperature is then calculated based on the values of the physical quantity after convergence for each set.

FIG. 1

EP 4 742 111 A1

## Description

FIELD

The embodiments discussed herein relate to a computer program, a quantum computing support method, and an information processing apparatus.

BACKGROUND

Quantum computers are prone to errors in the state of quantum bits (hereinafter "qubits") due to factors such as environmental noise. In an error correction technique for qubits (or "quantum error correction"), information is encoded with redundancy. To realize quantum error correction at a practical level, a large number of qubits, in the region of one million, are used. Quantum computers that have been currently realized are limited to medium to small scale quantum computers (or noisy intermediate scale quantum computers (NISQ)) of about several hundred qubits at the maximum and are unable to correct faults.

A quantum computer that is capable of fault correction is called a "fault tolerant quantum computer (FTQC)". Small-scale FTQC are expected to be realized fairly soon, and may be referred to as "early-stage FTQC".

One field in which calculation by a quantum computer is effective is the computation of a physical quantity in a quantum system. Of particular significance in practice is computation of a thermal-equilibrium expectation value at a finite temperature. To obtain a thermal-equilibrium expectation value at a finite temperature, as one example, an expectation value for an ensemble of quantum states representing a thermal equilibrium state is calculated. One example of an ensemble that represents a thermal equilibrium state at a finite temperature is a canonical ensemble. The minimally entangled typical thermal state (METTS) algorithm is known as a method of efficiently generating a canonical ensemble.

Although the METTS algorithm was originally devised as a computing technique to run on a classical computer, it is possible to run an equivalent technique on a quantum computer. An algorithm equivalent to METTS that is executed on a quantum computer is distinguished by the name "quantum METTS" (or "QMETTS").

In the METTS algorithm, an imaginary time evolution algorithm is used to realize the Boltzmann weights (the same applies to QMETTS). As a quantum imaginary time evolution technique for realizing imaginary time evolution on a quantum computer, there is a technique based on linear combination of unitaries (LCU). LCU is a quantum computing method in which imaginary time evolution is expanded into polynomials, respective degrees of polynomials are expressed by quantum circuits, and a physical quantity is calculated through linear combination of the polynomials.

When LCU is realized by an early-stage FTQC, a target physical quantity is calculated based on a computation result obtained by causing each of a plurality of partial circuits extracted from an original quantum circuit to act on qubits. In LCU, since execution is performed by small-scale partial circuits, computation is possible even by an early-stage FTQC.

A method for obtaining an excited state of a Hamiltonian has been proposed as one example of a quantum computing technique. A combinatorial optimization computation method has also been proposed where it is possible to obtain a feasible solution even for problems where a feedback-based algorithm for quantum optimization (FALQON) does not bring about a feasible solution. Quantum algorithms have also been proposed that improve quantum optimization by utilizing peripheral data. A quantum many-body simulation method for a finite temperature system in which series expansion of a quantum imaginary time evolution is sampled has also been proposed. This quantum many-body simulation method is called "Markov-chain Monte Carlo with sampled pairs of unitaries (MCMC-SPU)". See, for example, the following literatures.

International Publication Pamphlet No. WO 2020/090559 Japanese Laid-open Patent Publication No. 2023-43100 U.S. Patent Application Publication No. 2020/0057957
Norifumi Matsumoto, Shoichiro Tsutsui, Yuya O. Nakagawa, Yuichiro Hidaka, Shota Kanasugi, Kazunori Maruyama, Hirotaka Oshima, Shintaro Sato, "Quantum many-body simulation of finite-temperature systems with sampling a series expansion of a quantum imaginary-time evolution", arXiv:2409.07070v1, quant-ph, 11 Sep. 2024

In MCMC-SPU, computation results of a plurality of simplified partial circuits are linearly combined by a classical computer to obtain a thermal-equilibrium expectation value for a physical quantity in a quantum system at a finite temperature. In the iterative computation of each partial circuit, the state obtained by projective measurement in the computational basis of the output state of the partial circuit in one step is used as the input state of the next step. By doing so, an appropriate statistical ensemble is efficiently generated.

In MCMC-SPU, the input state of the first step (that is, the first iteration in iterative computation) in the computation by each partial circuit is randomly selected from the computational basis, for example. This is equivalent to the initial distribution being a uniform distribution. In the iterative computation of a partial circuit, the state distribution gradually changes from the initial distribution and converges to a stationary distribution. The stationary distribution at the time of convergence is a statistical ensemble to be realized.

However, when the initial state is randomly selected from the uniform distribution, there is the possibility of a state that is far from the stationary distribution being selected. In this case, it takes a long time to converge to the stationary distribution. This lengthening of the convergence time tends to especially significant for a set of higher degrees for which the circuit structure is complex.

SUMMARY

In one aspect, an object of the present disclosure is to improve the computational efficiency of a thermal-equilibrium expectation value of a physical quantity at a finite temperature.

In one aspect, there is provided a computer program that causes a computer to execute a process including: expanding an imaginary time evolution equation for calculating a thermal-equilibrium expectation value of a physical quantity at a finite temperature in a calculation target system, into equations of a plurality of degrees; generating a plurality of sets of degrees obtained by extracting two degrees from the plurality of degrees; generating, for each of the plurality of sets, a quantum circuit indicating a procedure of quantum computation of a value of the physical quantity, the value being obtained by partial imaginary time evolution based on an expression of a first degree included in the set and an expression of a second degree included in the set; causing a quantum computer to repeatedly execute, for each of the plurality of sets, the quantum computation based on the corresponding quantum circuit until a value of the physical quantity obtained from a result of the quantum computation converges, wherein, as an input state at a start of quantum computation based on a first quantum circuit corresponding to at least one first set out of the plurality of sets, a state in a stationary distribution of a measurement result obtained by the quantum computation based on a second quantum circuit corresponding to a second set that differs from the at least one first set out of the plurality of sets is used; and calculating the thermal-equilibrium expectation value of the physical quantity at the finite temperature, based on the values of the physical quantity after convergence for each of the plurality of sets.

BRIEF DESCRIPTION OF DRAWINGS

FIG. 1 depicts one example of a quantum computing support method according to a first embodiment;
FIG. 2 depicts an example configuration of a quantum computing system;
FIG. 3 depicts example hardware of a computer;
FIG. 4 depicts a first example (a first implementation method) of a quantum circuit for realizing LCU;
FIG. 5 depicts a second example (a second implementation method) of a quantum circuit for realizing LCU;
FIG. 6 depicts one example of MCMC-SPU;
FIG. 7 depicts one example of an initial state set by a uniform distribution;
FIG. 8 depicts one example of an initial state set by a stationary distribution of a set of lower degrees;
FIG. 9 depicts one example of a method of determining an initial state in a case where partial circuits are sequentially executed from a partial circuit corresponding to a set of lower degrees;
FIG. 10 depicts examples of partial circuits corresponding to sets of degrees;
FIG. 11 is a block diagram depicting example functions of a quantum computing system;
FIG. 12 is a flowchart depicting an example computation procedure of a finite temperature expectation value;
FIG. 13 depicts one example of an Ising model;
FIG. 14 depicts one example of convergence to a stationary distribution obtained for a set of a second degree and a second degree;
FIG. 15 depicts one example of convergence to a stationary distribution obtained for a set of the second degree and the third degree without using a stationary distribution of another set of degrees; and
FIG. 16 depicts one example of convergence to a stationary distribution obtained for a set of the second degree and the third degree using stationary distribution of a set of the second degree and the second degree.

DESCRIPTION OF EMBODIMENTS

Several embodiments will now be described with reference to the accompanying drawings. Note that the respective embodiments may be implemented in combination within a range that remains technically consistent.

[First Embodiment]

The first embodiment is a quantum computing support method for improving the computational efficiency of thermal-equilibrium expectation values of a physical quantity at a finite temperature.

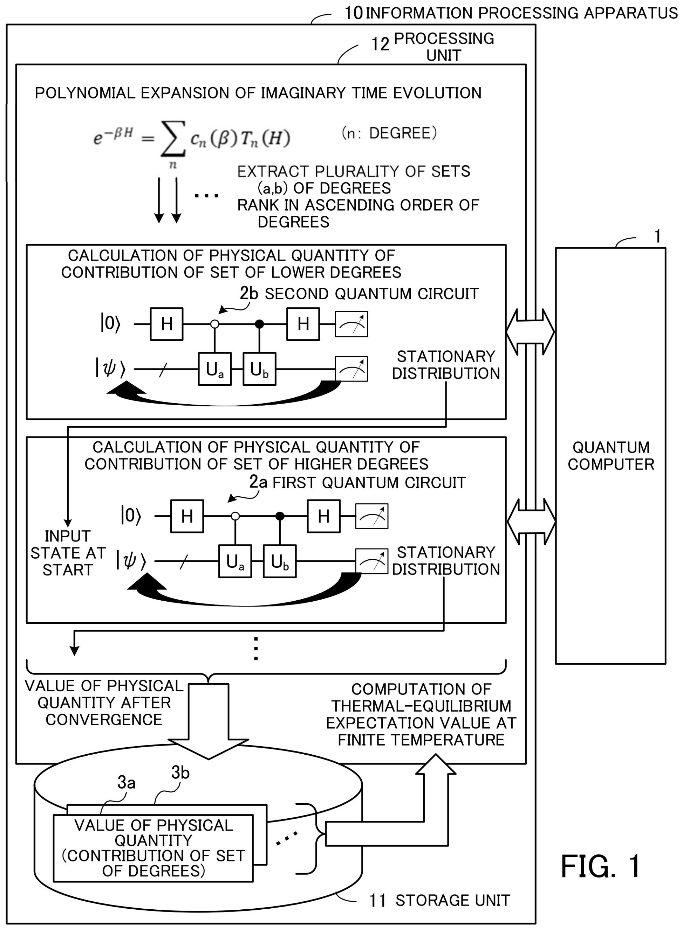

FIG. 1 depicts one example of a quantum computing support method according to a first embodiment. FIG. 1 depicts an information processing apparatus 10 for implementing the quantum computing support method. As one example, the information processing apparatus 10 may implement the quantum computing support method by executing a quantum computing support program.

The information processing apparatus 10 includes a storage unit 11 and a processing unit 12. As examples, the storage unit 11 is a memory or a storage apparatus included in the information processing apparatus 10. As one example, the processing unit 12 is a processor included in the information processing apparatus 10. The information processing apparatus 10 may include a plurality of processors. A certain process and another process out of a plurality of processes performed by the information processing apparatus 10 may be executed by different processors.

Through the procedure described below, the processing unit 12 calculates a thermal-equilibrium expectation value of a physical quantity at a finite temperature.

The processing unit 12 expands (through polynomial expansion) an expression of imaginary time evolution, which is used to compute a thermal-equilibrium expectation value at a finite temperature of a physical quantity in a system to be calculated (or "system of interest"), into expressions of a plurality of degrees. A specific expression for expanding an imaginary time evolution will be described later (see Equation (2)). By doing so, a plurality of n-degree (where n is the number of degrees) expressions, such as a zero-degree expression, a one-degree expression, and a two-degree expression, are obtained.

Next, the processing unit 12 generates a plurality of sets of degrees obtained by extracting a degree twice from a plurality of degrees. The processing unit 12 generates, for each generated set, a quantum circuit indicating a procedure of quantum computation of the value of a physical quantity obtained by partial imaginary time evolution based on an expression of the first degree included in the set and an expression of the second degree included in the set. An expression for computing the value of a physical quantity will be described in detail later (see Equation (1)). As one example, the processing unit 12 generates a quantum circuit with Hermitian properties under appropriate conditions for ancilla qubits.

The quantum circuit does not output a state after imaginary time evolution, but instead outputs a state that reflects only the contribution of an extracted set of degrees. For this reason, a quantum circuit for each set of degrees may also be considered to be a partial circuit of a quantum circuit indicating an entire imaginary time evolution.

For each of the generated sets of degrees, the processing unit 12 causes the quantum computer 1 to iteratively execute corresponding quantum computation based on a quantum circuit until the value of the physical quantity obtained from the result of the quantum computation converges. When doing so, the processing unit 12 uses a state in a stationary distribution of measurement results obtained by quantum computation based on a second quantum circuit 2b corresponding to a second set as the input state at the start of the quantum computation based on a first quantum circuit 2a corresponding to at least one first set out of the generated sets. When doing so, as one example, the processing unit 12 determines a set obtained by combining degrees lower than the first set out of the generated sets as the second set.

The input state at the start of quantum computation based on a quantum circuit is an initial state of qubits in the system of interest when the quantum circuit is executed for the first time. The qubits of the system of interest are qubits aside from ancilla qubits out of the qubits subjected to an operation by the quantum circuit, and are also referred to as "data qubits".

The processing unit 12 stores the generated values 3a, 3b, ... of the physical quantity at the time of convergence for each set of degrees in the storage unit 11, for example. The processing unit 12 then calculates the thermal-equilibrium expectation value of the physical quantity at the finite temperature based on the values 3a, 3b, ... of the physical quantity after convergence for each generated set of degrees. As one example, the processing unit 12 calculates a weighted average of the values 3a, 3b, ... of the physical quantity after convergence for each generated set of the degrees. The obtained weighted average is the thermal-equilibrium expectation value of the physical quantity at the finite temperature.

In this way, in the computation of the thermal-equilibrium expectation value of the physical quantity at the finite temperature, a state in a stationary distribution produced when the computation results of a physical quantity calculation of the contribution of a set of lower degrees have converged to a stationary distribution is used as the initial state of a physical quantity calculation of the contribution of the set of higher degrees. By doing so, the initial state is prevented from greatly deviating from the stationary distribution produced when the computation results based on a quantum circuit corresponding to the set of higher degrees converge. As a result, the computation results will soon converge, which improves the computational efficiency.

Note that it is also possible to use a state in the stationary distribution produced when the computation results of a physical quantity calculation of the contribution of a set of higher degrees converges to the stationary distribution as the initial state of the physical quantity calculation of the contribution of a set of lower degrees. In this case also, the distribution of values of the physical quantity in the computation results will soon converge. However, a quantum circuit corresponding to a set of higher degrees has a larger number of quantum gates (that is, a deeper circuit depth) than a quantum circuit corresponding to a set of lower degrees. For this reason, using a stationary state of computation results of a set of lower degrees as the initial state of a quantum circuit for a set of higher degrees is more effective in improving computational efficiency.

For this reason, the processing unit 12 may rank the generated sets in ascending order of degrees for example, and when the rank of a first set is (N+1), where N is a natural number, the processing unit 12 may determine the set ranked N as the second set. In this case, the processing unit 12 executes quantum computation based on the generated quantum circuits of each set in ascending order of the rankings. Note here that regarding sets of degrees, the expression "a set of low degrees" refers for example to the sum of the degrees included in the set being small.

By determining the initial state of quantum computation of a next set of degrees using a stationary distribution of the immediately preceding set of degrees when sets have ranked in ascending order of the degrees in this way, it is possible to determine the initial state as a state that is closer to the stationary distribution of the set of degrees to be calculated. As a result, computational efficiency is improved.

When executing the quantum circuit of each set of degrees, the processing unit 12 causes the quantum computer 1 to repeatedly execute quantum computation based on the quantum circuit. In this iterative computation, the processing unit 12 may set the output state after quantum computation in a quantum circuit corresponding to a set of degrees as the input state for the next iteration of quantum by that quantum circuit. As one example, the processing unit 12 sets a projective measurement result in the computational basis of the output state after the computation by the quantum circuit based on the input state in the $M^{th}$ (where M is a natural number) quantum computation as the input state in the $(M+1)^{th}$ quantum computation.

As a result, the input state when iteratively computing the value of a physical quantity based on a quantum circuit becomes a statistical ensemble that is suited to that quantum circuit. Here, the expression a "statistical ensemble that is suited to a quantum circuit" is a statistical ensemble capable of causing the value of a physical quantity calculated based on that quantum circuit to quickly converge. For example, it has been confirmed that by generating a quantum circuit with Hermitian properties under appropriate conditions for the ancilla qubits, a statistical ensemble that causes the value of a physical quantity calculated based on that quantum circuit to quickly converge is produced. Since an appropriate statistical ensemble is automatically generated, the value of the physical quantity obtained by quantum computing converges quickly, which makes the processing efficient.

Note that the processing unit 12 sets a state that has been randomly selected from a stationary distribution corresponding to a set of lower degrees for example as the initial state of the first quantum circuit 2a for a set of higher degrees. In more detail, the processing unit 12 selects one state from a plurality of states indicated in the computation results of a plurality of iterations of quantum computation based on the second quantum circuit 2b after the measurement results of the quantum computation based on the second quantum circuit 2b corresponding to the set of lower degrees have become a stationary distribution. Then, the processing unit 12 sets the selected one state as an input state at the start of quantum computation based on the first quantum circuit 2a. In this way, it is possible to reliably select the initial state of the first quantum circuit 2a for the set of higher degrees from the stationary distribution corresponding to the set of lower degrees.

[Second Embodiment]

The second embodiment is a quantum computing system that efficiently calculates a thermal-equilibrium expectation value of a physical quantity at a finite temperature.

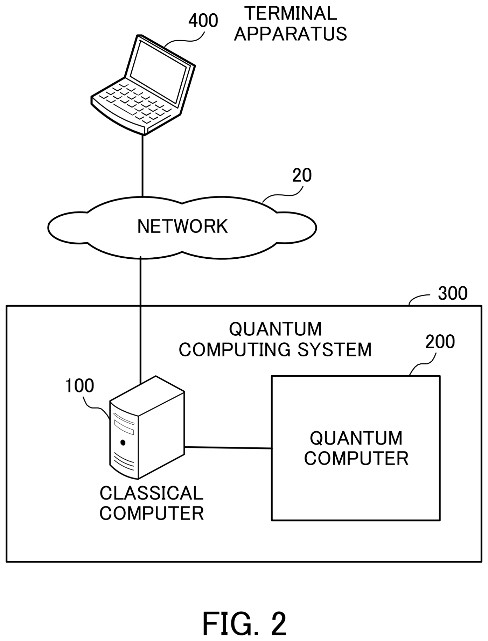

FIG. 2 depicts an example configuration of a quantum computing system. The quantum computing system 300 is a hybrid computer system in which a classical computer 100 and a quantum computer 200 operate in cooperation. The classical computer 100 is also referred to as a "von Neumann computer".

A terminal apparatus 400 is connected to the classical computer 100 via a network 20. The terminal apparatus 400 is a computer used by a user who requests quantum computation by the quantum computing system 300. The classical computer 100 receives the quantum circuit from the terminal apparatus 400. The quantum circuit indicates an order of operations to be performed on qubits as an arrangement of elements, such as gates. Qubits are bits capable of representing quantum superpositions of a state of "0" and a state of "1".

The classical computer 100 instructs the quantum computer 200 to control the qubits according to the quantum circuit received from the terminal apparatus 400. The classical computer 100 acquires the measurement result of each qubit from the quantum computer 200.

The quantum computer 200 includes a plurality of qubits and an apparatus for manipulating each of the plurality of qubits. The plurality of qubits included in the quantum computer 200 are realized by superconducting quantum devices, for example. The qubit may be realized by a quantum device of another type, such as an ion trap.

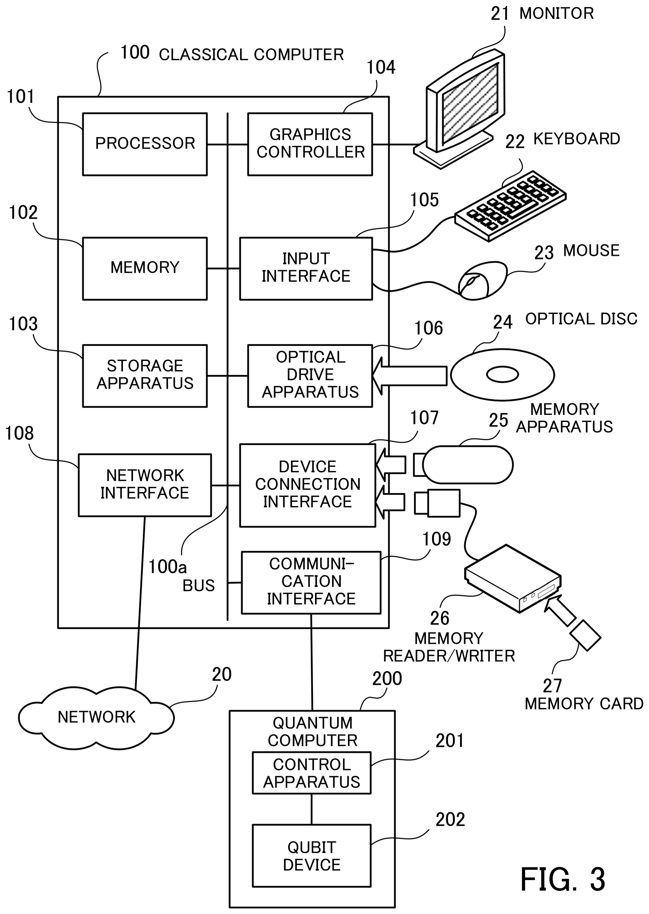

FIG. 3 depicts example hardware of a computer. The entire classical computer 100 is controlled by a processor 101. A memory 102 and a plurality of peripheral devices are connected to the processor 101 via a bus 100a.

The classical computer 100 may be a multiprocessor system including a plurality of processors. A group of processors in a multiprocessor system may be referred to as the "processor 101". The processor 101 may also be referred to as "processor circuitry". Each of the plurality of processors may execute some or all of the plurality of processes executed by the classical computer 100. When there are a plurality of related processes, a processor out of the plurality of processors that executes a certain process may differ from processors that execute processes that differ from the certain process.

As examples, the processor 101 is a central processing unit (CPU), a micro processing unit (MPU), or a digital signal processor (DSP). At least some of the functions realized by the processor 101 executing the program may be realized by an electronic circuit such as an application specific integrated circuit (ASIC) or a programmable logic device (PLD).

The memory 102 is used as a main storage apparatus of the classical computer 100. The memory 102 temporarily stores at least part of an operating system (OS) program and/or an application program to be executed by the processor 101. The memory 102 also stores various data used in processing by the processor 101. As an example of the memory 102, a volatile semiconductor storage device such as a random access memory (RAM) is used.

The peripheral devices connected to the bus 100a include a storage apparatus 103, a graphics controller 104, an input interface 105, an optical drive apparatus 106, a device connection interface 107, a network interface 108, and a communication interface 109.

The storage apparatus 103 electrically or magnetically writes and reads data to and from a built-in recording medium. The storage apparatus 103 is used as an auxiliary storage apparatus of the classical computer 100. The storage apparatus 103 stores an OS program, application programs, and various data. As examples of the storage apparatus 103, a hard disk drive (HDD) or a solid state drive (SSD) may be used.

The graphics controller 104 is a computational apparatus that performs image processing. As one example, the graphics controller 104 is a graphics processing unit (GPU). A monitor 21 is connected to the graphics controller 104. The graphics controller 104 displays images on a screen of the monitor 21 in accordance with an instruction from the processor 101. Examples of the monitor 21 include a display apparatus using organic electro luminescence (EL) and a liquid crystal display apparatus. When, as one example, a GPU is used as the graphics controller 104, the graphics controller 104 may execute complicated numerical calculations such as matrix calculations.

A keyboard 22 and a mouse 23 are connected to the input interface 105. The input interface 105 transmits signals sent from the keyboard 22 and the mouse 23 to the processor 101. Note that the mouse 23 is one example of a pointing device, and other pointing devices may be used. Examples of other pointing devices include a touch panel, a tablet, a touch pad, and a track ball.

The optical drive apparatus 106 reads data recorded on an optical disc 24 or writes data onto the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a CD-recordable (CD-R), CD-rewritable (CD-RW), or the like.

The device connection interface 107 is a communication interface for connecting peripheral devices to the classical computer 100. As examples, a memory apparatus 25 and a memory reader/writer 26 may be connected to the device connection interface 107. The memory apparatus 25 is a recording medium equipped with a function of communicating with the device connection interface 107. The memory reader/writer 26 is a device that writes data onto a memory card 27 or reads data from the memory card 27. The memory card 27 is a card-type recording medium.

The network interface 108 is connected to the network 20. The network interface 108 transmits and receives data to and from other computers or communication devices via the network 20. The network interface 108 is a wired communication interface connected via a cable to a wired communication device, such as a switch or a router. The network interface 108 may alternatively be a wireless communication interface which may be connected via radio waves to a wireless communication apparatus, such as a base station or an access point.

The communication interface 109 is connected to the quantum computer 200. The communication interface 109 communicates with the quantum computer 200. The communication interface 109 transmits a quantum gate operation instruction, which is based on the quantum circuit to the quantum computer 200, for example. The communication interface 109 also receives an execution result of the quantum circuit from the quantum computer 200.

The classical computer 100 realizes the processing functions of the second embodiment using hardware like that described above. The information processing apparatus 10 described in the first embodiment may also be implemented by similar hardware to the classical computer 100 depicted in FIG. 3.

As one example, the classical computer 100 realizes the processing functions of the second embodiment by executing a program recorded in a computer-readable recording medium. A program in which the processing content to be executed by the classical computer 100 is written may be recorded on various recording media. As one example, a program to be executed by the classical computer 100 may be stored in the storage apparatus 103. The processor 101 loads at least a part of the program in the storage apparatus 103 into the memory 102 and executes the program. The program to be executed by the classical computer 100 may be recorded in a portable recording medium such as the optical disc 24, the memory apparatus 25, or the memory card 27. The program stored on the portable recording medium becomes executable after being installed in the storage apparatus 103 under the control of the processor 101, for example. Alternatively, the processor 101 may read and execute the program directly from the portable recording medium.

The quantum computer 200 includes a control apparatus 201 and a qubit device 202. The control apparatus 201 executes a gate operation on a qubit in the qubit device 202 according to an instruction from the classical computer 100. As one example, the control apparatus 201 performs a gate operation on a qubit by irradiating the qubit with microwaves of a predetermined frequency.

The qubit device 202 has a plurality of qubits. As examples, the qubit device 202 includes qubits of superconducting, ion-trap, cold-atom and other types. The qubit device 202 may also be referred to as the "quantum processing unit (QPU)".

As one example, a user who uses the quantum computing system 300 uses the terminal apparatus 400 to generate a quantum circuit for solving a problem to be solved by quantum computation. When the user instructs the terminal apparatus 400 to execute quantum computation, a quantum computation request including the generated quantum circuit is transmitted from the terminal apparatus 400 to the quantum computing system 300.

In the quantum computing system 300, in response to a quantum computation request, the classical computer 100 causes the quantum computer 200 to execute quantum computation based on a quantum circuit. When doing so, the classical computer 100 converts the quantum circuit to be executed into a quantum circuit that uses executable quantum gates in accordance with the hardware specification of the quantum computer 200 (such as native gates corresponding to qubit devices).

Next, a method of calculating a thermal-equilibrium expectation value of a physical quantity of a quantum system at a finite temperature will be described in detail. One important application of the quantum computer 200 is calculation of a physical quantity in a quantum system.

Of particular significance in practice is calculation of expected thermal equilibrium values at finite temperatures. Here, the expression "finite temperature" refers to a temperature aside from absolute zero.

When finding a thermal-equilibrium expectation value at a finite temperature, as one example, an expectation value of a physical quantity related to an ensemble of quantum states representing a thermal equilibrium state is calculated. One example of an ensemble of quantum states representing a thermal equilibrium state at a finite temperature is a canonical ensemble. A canonical ensemble is an ensemble of quantum states in which an eigenstate $|E\rangle$ with an energy eigenvalue E appears according to a probability distribution called "Boltzmann weights".

The canonical ensemble $\rho$ is expressed by an equation "$\rho = \Sigma_E (e^{-\beta E}/Z)|E\rangle\langle E|$". In this equation, "$e^{-\beta E}/Z$" is the Boltzmann weights. The expected thermal equilibrium value $\langle O \rangle$ of a physical quantity in a canonical ensemble is "$\langle O \rangle = \Sigma_E (e^{-\beta E}/Z)\langle E|O|E\rangle$". Here, Z is the partition function "$Z = \Sigma_E e^{-\beta E}$". $\beta$ is the inverse temperature (that is, the reciprocal of temperature).

It is possible to efficiently generate a canonical ensemble using a METTS algorithm. When the classical computer 100 generates a canonical ensemble using METTS, processing is performed in the following procedure.

1. The classical computer 100 selects an input state from the computational basis.
2. The classical computer 100 executes an imaginary time evolution algorithm to realize the Boltzmann weights.
3. The classical computer 100 calculates an expectation value of a physical quantity to be obtained.
4. To generate a probability distribution in keeping with the Boltzmann weights, the classical computer 100 calculates a probability distribution corresponding to projective measurement of the output state with respect to the computational basis.
5. The classical computer 100 repeats (2.) to (4.) above with a state that has been stochastically selected according to the probability distribution obtained in (4.) set as the next input state.

When repeating (2.) to (4.), the ensemble of quantum states used as input states in the iteration of construct a canonical ensemble. That is, in the case of the METTS algorithm, a canonical ensemble is automatically generated in the process of calculating the expectation value of a physical quantity.

Although the METTS algorithm described above is a calculation method with a premise of execution by the classical computer 100 alone, the quantum computing system 300 is capable of executing a method called QMETTS, which is equivalent to METTS.

In QMETTS also, imaginary time evolution is performed to realize the Boltzmann weights. Various methods are available for quantum imaginary time evolution to realize imaginary time evolution on the quantum computer 200.

Examples of quantum imaginary time evolution techniques that are effective on NISQ include variational imaginary time evolution, imaginary time evolution in a narrow sense, and stochastic imaginary time evolution. Variational imaginary time evolution is a technique for variational optimization of parameters of a quantum circuit to reproduce imaginary time evolution. Imaginary time evolution in a narrow sense is a technique of determining coefficients of simple quantum gates from an equation to reproduce imaginary time evolution. Stochastic imaginary time evolution is a technique of post-selecting only events in which an added ancilla qubit satisfies a specific condition.

Quantum imaginary time evolution techniques effective on FTQC include a technique based on a quantum singular value transformation algorithm, a technique based on LCU, and the like. A technique based on a quantum singular value transformation algorithm is a method of approximately implementing imaginary time evolution by performing polynomial transformation on eigenvalues of a Hamiltonian. LCU is a technique in which imaginary time evolution is expanded into polynomials, respective degrees of polynomials are expressed by quantum circuits, and a linear combination of all the polynomials is obtained. LCU is feasible even with relatively small-scale early-stage FTQC.

In the quantum computing system 300 according to the second embodiment, a thermal-equilibrium expectation value of a physical quantity in a quantum system at a finite temperature is calculated by QMETTS in keeping with imaginary time evolution by LCU. It is possible to execute a quantum circuit for imaginary time evolution through division into a plurality of partial circuits that use low numbers of qubits, resulting in favorable compatibility with early-stage FTQC.

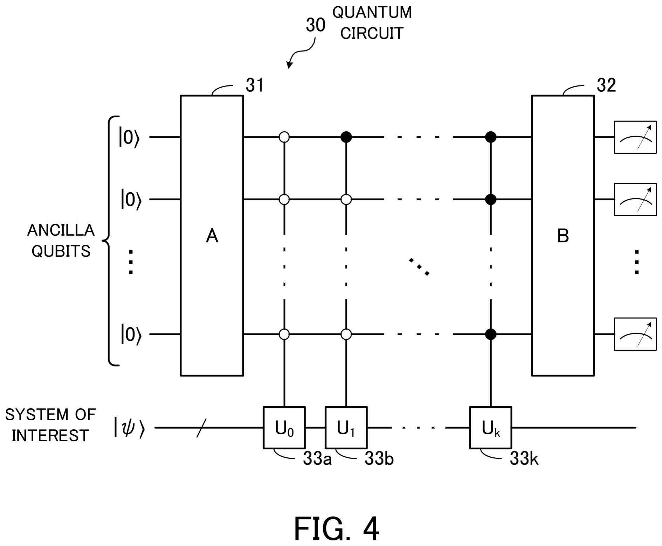

FIG. 4 depicts a first example (first implementation method) of a quantum circuit for realizing LCU. In the quantum circuit 30, a plurality of qubits representing the state $|\psi\rangle$ of the system of interest and a gate operation for an ancilla qubit (each qubit whose initial state is 10)) are depicted.

Unitary gates 33a, 33b, ..., 33k corresponding to polynomials of respective degrees when imaginary time evolution has been subjected to polynomial expansion are arranged for qubits of the system of interest. A gate operation of a predetermined unitary gate 31 is performed on the ancilla qubits.

Each of the unitary gates 33a, 33b, ..., 33k of the system of interest is a gate that uses each of the ancilla qubits as a control qubit and operates when the state of the control qubit satisfies a predetermined condition. Ancilla qubits that serve as control qubits of the unitary gates 33a, 33b, ..., 33k are indicated by white circles or black circles. A white circle has negative polarity and indicates that a gate operation is performed on the target qubit (a qubit of the system of interest) when the state is "0". A black circle has positive polarity and indicates that a gate operation is performed on the target qubit (a qubit of the system of interest) when the state is "1".

For each of the unitary gates 33a, 33b, ..., 33k, when the state of every control qubit is the state in which a gate operation is performed, a gate operation is performed on the qubit of the system of interest according to the unitary gate in question.

After the gate operations of the unitary gates 33a, 33b, ..., 33k, a gate operation of the unitary gate 32 is performed on the ancilla qubits.

The quantum circuit 30 realizes computation in which the quantum circuits of respective components after polynomial expansion are sequentially operated in the form of a control unitary and then linearly combined. In the quantum circuit 30, a large number of ancilla qubits are used in addition to the qubits of the system of interest that are operated on by the unitary gates 33a, 33b, ..., and 33k. This means there is an increase in the number of qubits used.

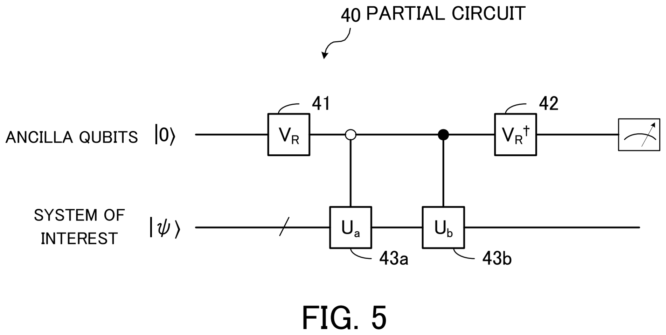

FIG. 5 depicts a second example (second implementation method) of a quantum circuit for realizing LCU. The partial circuit 40 is a simplified quantum circuit obtained by extracting a gate operation corresponding to a set of two degrees out of the degrees obtained by polynomial expansion of an imaginary time evolution equation. In the partial circuit 40, one ancilla qubit is used. First, a gate operation of a unitary gate 41 is performed on the ancilla qubit.

When the state of the ancilla qubit that has been placed in the superposed state by the unitary gate 41 is 10), the gate operation of a unitary gate 43a corresponding to the polynomial of one degree out of the selected two degrees is performed on the qubit of the system of interest. Next, when the state of the ancilla qubit is 11), the gate operation of a unitary gate 43b corresponding to the polynomial of the other degree out of the selected two degrees is performed on the qubit of the system of interest. After the two unitary gates 43a and 43b, a gate operation of a unitary gate 42 is performed on the ancilla qubit. When the gate operation of the unitary gate 41 is represented by a matrix "$V_R$", a matrix indicating the gate operation of the unitary gate 42 is represented by "$V_R^\dagger$". "$V_R^\dagger$" is called the adjoint matrix, and is a matrix obtained by transposing "$V_R$" and taking complex conjugates of components.

By using the partial circuit 40, it is possible to extract a quantum circuit with the two components, operate a simplified partial circuit to compute a physical quantity, and subsequently calculate a linear combination of the measurement results using the classical computer 100.

In this second implementation method, since the output state of the quantum circuit is not a state after imaginary time evolution, a thermal equilibrium state will not be generated even when projective measurement is performed in the manner of QMETTS. To compute a thermal-equilibrium expectation value of a physical quantity using this second implementation method, a huge number of states are randomly sampled from an exponentially large number of states relative the size of the system and calculation is separately performed for each sample, resulting in poor computational efficiency.

For this reason, with the second implementation method, it is possible to improve the computational efficiency by applying MCMC-SPU (refer to "Quantum many-body simulation of finite-temperature systems with sampling a series expansion of a quantum imaginary-time evolution" mentioned earlier). MCMC-SPU is a technique that efficiently generates, for each partial circuit for which a contribution of a set of two degrees has been extracted, a statistical ensemble suitable for that partial circuit and thereby obtains a value indicating the contribution of that partial circuit.

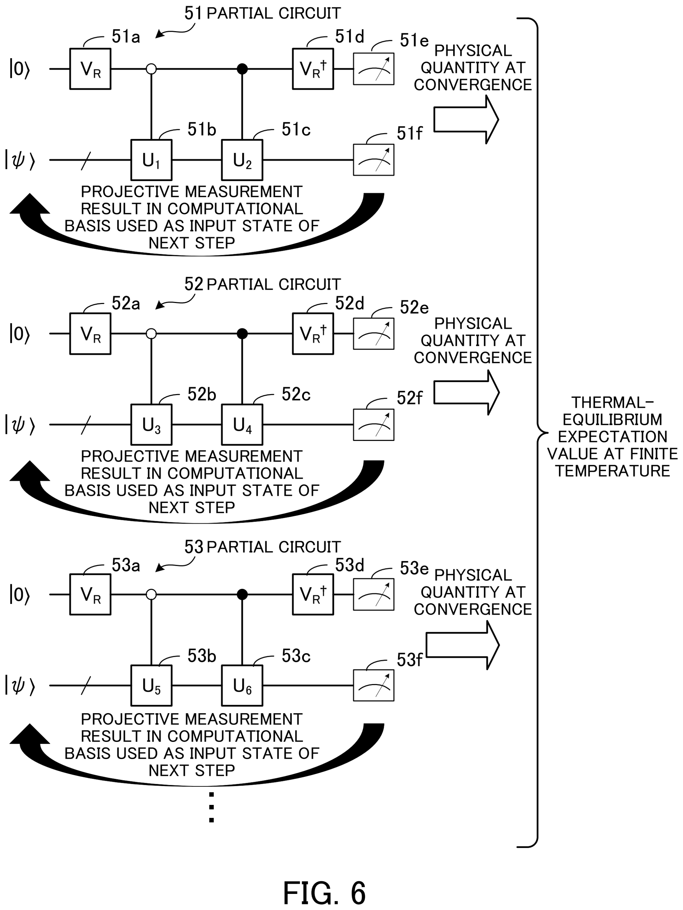

FIG. 6 depicts one example of MCMC-SPU. Polynomials of each degree are obtained by polynomial expansion of an imaginary time evolution. The polynomials of the respective degrees are represented by unitary matrices $U_1, U_2, U_3, U_4, U_5, U_6, \ldots$. In MCMC-SPU, a plurality of sets of two degrees are extracted out of the plurality of degrees resulting from the polynomial expansion. In the MCMC-SPU, partial circuits 51, 52, 53, ... are generated for each set of degrees.

In the partial circuit 51, a gate operation on a plurality of qubits representing the system of interest and one ancilla qubit is indicated. The input state of the plurality of qubits representing the system of interest is $|\psi\rangle$, and the input state of the ancilla qubit is 10).

In the partial circuit 51, first, a unitary gate 51a (gate operation "$V_R$") is disposed for the ancilla qubit. Next, a unitary gate 51b, which is controlled with the ancilla qubit as a negative control qubit, is disposed for the qubits of the system of interest. A unitary gate 51c, which is controlled with the ancilla qubit as a positive control qubit, is also disposed for the qubits of the system of interest. The two unitary gates 51b and 51c are quantum circuits that respectively correspond to the two extracted degrees and cause the quantum computer 200 to compute polynomials of the corresponding degrees.

After the unitary gate 51c, a unitary gate 51d (the gate operation "$V_R{}^\dagger$") is disposed for the ancilla qubit. In the partial circuit 51, measurements 51e and 51f of the states of the ancilla qubit and the qubits of the state of interest are indicated.

Also in the partial circuit 52, a unitary gate 52a (the gate operation "$V_R$") for the ancilla qubit, two unitary gates 52b and 52c for the qubits representing the state of the system of interest, and a unitary gate 52d (the gate operation "$V_R{}^\dagger$") for the ancilla qubit are disposed. In the partial circuit 52, measurements 52e and 52f of the states of the ancilla qubit and the qubits of the state of interest are indicated.

Also in the partial circuit 53, a unitary gate 53a (the gate operation "$V_R$") for the ancilla qubit, two unitary gates 53b and 53c for the qubits representing the state of the system of interest, and a unitary gate 53d (the gate operation "$V_R{}^\dagger$") for the ancilla qubit are disposed. In the partial circuit 53, measurements 53e and 53f of the states of the ancilla qubit and the qubits of the state of interest are indicated.

The classical computer 100 causes the quantum computer 200 to repeatedly execute quantum computation according to the partial circuits 51, 52, 53, ... corresponding to the respective sets of degrees until a physical quantity obtained from the measurement results converges. When the physical quantity does not converge, the classical computer 100 causes the quantum computer 200 to perform projective measurement on the computational basis of the output state of the qubits of the system of interest, and sets the measurement result as the input state for the quantum computation of the next iterative step.

In this way, by using the result of the projective measurement of the output state as the input state in the next step, a statistical ensemble suited to quantum computation according to the extracted set of degrees is generated as the input state. For example, the input state of the partial circuit 51 is a statistical ensemble suited to computation of the unitary matrices $U_1$ and $U_2$ corresponding to the extracted degrees. The input state of the partial circuit 52 is a statistical ensemble suited to computation of the unitary matrices $U_3$ and $U_4$ corresponding to the extracted degrees. The input state of the partial circuit 53 is a statistical ensemble suited to computation of the unitary matrices $U_5$ and $U_6$ corresponding to the extracted degrees.

A thermal-equilibrium expectation value at a finite temperature is calculated based on the physical quantity at the time of convergence of each of the partial circuits 51, 52, 53, .... That is, computation of a thermal-equilibrium expectation value at a finite temperature is performed by efficiently and automatically generating an input state that is an appropriate statistical ensemble.

The reason why computational efficiency is improved by MCMC-SPU as depicted in FIG. 6 is as follows.

The contribution of a specific partial circuit to the thermal-equilibrium expectation value of a physical quantity is obtained by obtaining a statistical ensemble average corresponding to that partial circuit. In more detail, a statistical ensemble $|\varphi_{ab}{}^{ik}\rangle$ is obtained according to a probability distribution "$W_{ab}{}^{ik}/\Sigma_j w_{ab}{}^{jk}$". To efficiently obtain the statistical ensemble, projective measurement in the computational basis may be performed on the output state of the partial circuit and a state obtained as the measurement result may be used as an input state of the next step. Through this operation, the input state undergoes a stochastic transition, and the stationary distribution obtained as the convergence destination will match the statistical ensemble to be realized.

A statistical ensemble obtained by a partial circuit is described in more detail below.

For a partial circuit including unitary gates $U_a$ and $U_b$ representing contributions of two degrees, the contribution of the partial circuit is obtained by calculating the following statistical ensemble average of a physical quantity O.

$$\langle O \rangle_{ab}^{k} = \sum_i \left( \frac{W_{ab}^{ik}}{\sum_j W_{ab}^{jk}} \right) \langle \Phi_{ab}^{ik} | O | \Phi_{ab}^{ik} \rangle \qquad (1)$$

Equation (1) expresses the contribution of the partial circuit including the unitary gates $U_a$ and $U_b$ corresponding to two degrees a and b (where a and b are integers equal to or greater than 0). $|\Phi_{ab}{}^{ik}\rangle$ is obtained by normalizing a state (that is, a state of the system of interest) obtained as a result of post-selection of an event in which $k \in \{0,1\}$ is obtained by performing projective measurement in the computational basis of the ancilla qubit after the partial circuit has operated with the input state of the system of interest as $|i\rangle$. $W_{ab}{}^{ik}$ is the resulting probability of the measurement of $|\Phi_{ab}{}^{ik}\rangle$.

The average of the statistical ensemble obtained by the computation of the partial circuit is an expectation value for a statistical ensemble in which $|\Phi_{ab}{}^{ik}\rangle$ is obtained with the probability "$W_{ab}{}^{ik}/\Sigma_j W_{ab}{}^{jk}$".

Next, polynomial expansion of an imaginary time evolution will be described in detail.

As one example, a Chebyshev polynomial $T_n(x)$ may be used for expansion of an imaginary time evolution. Here, n is an integer indicating the degree. x is an argument of the polynomial, and in this case, the Hamiltonian H is substituted for x. A Chebyshev polynomial is the best approximation polynomial, which approximates the function with the best accuracy for arguments within a finite interval. A specific form of expansion is given by the following Equation (2).

$$e^{-\beta H} = \sum_n c_n(\beta)\, T_n(H) \qquad\qquad (2)$$

Here, the expansion coefficient $c_n(\beta)$ is a modified Bessel function of the first kind. The finite temperature expectation value $\langle O \rangle_\beta$ of a physical quantity is expanded as in Equation (3) below.

$$\langle O \rangle_\beta = \frac{\sum_{mni} c_m\left(\frac{\beta}{2}\right) c_n\left(\frac{\beta}{2}\right) \langle i | T_m(H) O T_n(H) | i \rangle}{\sum_{mni} c_m\left(\frac{\beta}{2}\right) c_n\left(\frac{\beta}{2}\right) \langle i | T_m(H) T_n(H) | i \rangle} \qquad (3)$$

Here, m and n are integers indicating degrees. As described above, polynomial expansion of an imaginary time evolution is possible. Here, out of the selected two degrees (m, n), a unitary gate corresponding to the $m^{th}$ degree polynomial is $U_a$, and the unitary gate corresponding to the $n^{th}$ degree polynomial is $U_b$. In this case, $\langle O \rangle_{ab}{}^k$ indicated in Equation (1) is obtained from the measurement result of the partial circuit corresponding to the selected set of two degrees (m, n). $\langle O \rangle_{ab}{}^k$ and Equation (3) have the following relationship.

$$\sum_i (\langle i | T_m(H) O T_n(H) | i \rangle + \langle i | T_n(H) O T_m(H) | i \rangle) = \left(\sum_j W_{ab}^{j0}\right)\langle O \rangle_{ab}^0 - \left(\sum_j W_{ab}^{j1}\right)\langle O \rangle_{ab}^1 \qquad (4)$$

Extraction of a set of two degrees from the polynomial expansion is performed as indicated below, for example.

In the polynomial expansion of the finite temperature expectation value of a physical quantity, a set (m, n) of two degrees is extracted in order from a set of lower degrees that has a large contribution.

When the truncation degree of the expansion is small, the maximum number of sets of degrees that are generated is limited. In this case, every set of degrees capable of being generated may be exhaustively extracted.

When the truncation degree of the expansion is large, the maximum number of sets of degrees that are generated is huge. In this case, it is sufficient to extract only sets of low degrees that have a large contribution. In particular, when a set of degrees is stochastically extracted according to a probability distribution that is proportional to the absolute value of the expansion coefficient "$c_m(\beta/2)c_n(\beta/2)$", the thermal-equilibrium expectation value is correctly obtained.

Partial circuits representing the extracted sets of degrees may independently perform parallel processing. As one example, when the quantum computer 200 has a sufficient number of qubits, the qubits may be divided into a plurality of groups, and a partial circuit may be executed for each group.

Here, let us compare QMETTS and MCMC-SPU. It is assumed here that QMETTS is implemented by the first implementation method (coherent superposition of all degrees) depicted in FIG. 4. These implementation methods have advantages and disadvantages in terms of performance and the load due to resources used for their implementation. An appropriate implementation method is therefore used in consideration of such advantages and disadvantages. In particular, there are the following differences between QMETTS and MCMC-SPU when implementing quantum imaginary time evolution.

[Implementation of Imaginary Time Evolution]

QMETTS is implemented in a quantum circuit that performs coherent superposition of all degrees. On the other hand, MCMC-SPU is implemented by partial circuits that extract contributions of sets of two degrees.

[Suitable Quantum Computers]

QMETTS needs to be performed by a large-scale FTQC. On the other hand, it is possible to implement MCMC-SPU even with a relatively small-scale FTQC (an early-stage FTQC).

[Depth of Circuit]

In QMETTS, the depth of the circuit is the sum of the depths of the unitary gates of all degrees, so that the depth of the entire circuit is large. On the other hand, in MCMC-SPU, the depth of the circuit is the sum of the depths of the extracted unitary gates of two degrees, so that the depth of the circuit is shallower than that in the first implementation method.

[Implementation Cost]

QMETTS is expensive to implement since a large number of non-Clifford gates are used. On the other hand, MCMC-SPU has a minimum number of non-Clifford gates and a relatively low implementation cost.

[Number of Quantum Circuits]

QMETTS uses one quantum circuit, but MCMC-SPU uses a number of quantum circuits equal to the number of sets of degrees to be extracted. When a plurality of quantum circuits are used as in MCMC-SPU, quantum computation based on quantum circuits may be executed by parallel processing.

[Method for Realizing Linear Combination]

In QMETTS, linear combination is realized by coherent superposition. On the other hand, in MCMC-SPU, linear combination is realized by summing the results of the partial circuits with the classical computer 100.

[Output State]

In QMETTS, a state after imaginary time evolution is outputted. On the other hand, in MCMC-SPU, a state where imaginary time evolution has been partially performed is outputted.

[Statistical Ensemble Obtained by Projective Measurement of Output State]

QMETTS obtains a canonical ensemble. On the other hand, with MCMC-SPU, a statistical ensemble (which differs from a canonical ensemble) corresponding to the extracted partial circuits is obtained.
The differences between QMETTS and MCMC-SPU are as described above. As described above, one of the advantages of MCMC-SPU is that MCMC-SPU may be implemented by a medium-scale FTQC. This means that in order to compute the thermal-equilibrium expectation value of a physical quantity in the quantum system at the finite temperature, it is practical to first implement MCMC-SPU. For this reason, the features of MCMC-SPU are discussed in more detail below.
In MCMC-SPU, a state obtained by projective measurement in the computational basis of an output state of a circuit is used as an input state of the next step. The initial input state is usually selected randomly from the computational basis. That is, the distribution of states in the measurement result will gradually change from the initial distribution, which is a uniform distribution, and converges to a stationary distribution. This stationary distribution is the statistical ensemble to be realized.

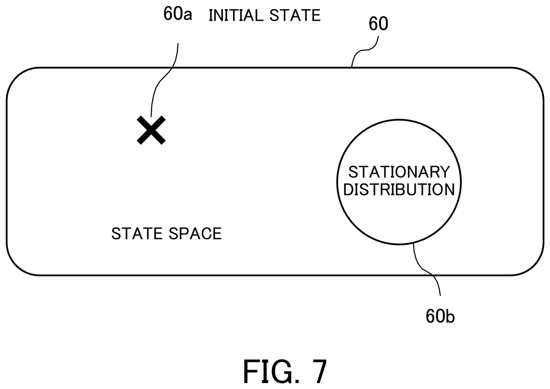

FIG. 7 depicts one example of an initial state set by a uniform distribution. When the initial state is a uniform distribution, a state at a position selected at random in a state space 60 of the states represented by the qubits of a partial circuit is the initial state 60a. When the initial state 60a is randomly selected from the uniform distribution in this way, there is the possibility of a state that is far from the stationary distribution 60b being selected. In this case, it will take time for the output of the partial circuit to converge to the stationary distribution 60b. This increase in the computation time will likely be more conspicuous for a set of high degrees for which the circuit structure is complex.
Here, as a method of calculating a thermal-equilibrium expectation value at a finite temperature of a physical quantity in a quantum system that differs from MCMC-SPU, there are expectations that an annealing method of simulating a high temperature state and then gradually lowering the temperature will be effective. However, since a partial circuit in MCMC-SPU does not have temperature dependency, it is not possible to directly apply an annealing method to MCMC-SPU.
For MCMC-SPU, the lower the temperature region, the greater the need to capture the contributions of higher degrees. For this reason, an operation of lowering the temperature is considered equivalent to an operation of adding the contributions of higher degrees to the contributions of lower degrees. It is possible to apply a procedure of sequentially computing contributions from the contributions of lower degrees to the contributions of higher degrees to MCMC-SPU. In this case, when it is possible to effectively use a low-degree stationary distribution to compute a high-degree stationary distribution, state convergence is expected to be efficient.

For this reason, the quantum computing system 300 according to the second embodiment determines the initial input state of a partial circuit to be executed from a stationary distribution obtained by a partial circuit corresponding to a lower set of degrees than the set of degrees corresponding to the partial circuit to be executed.

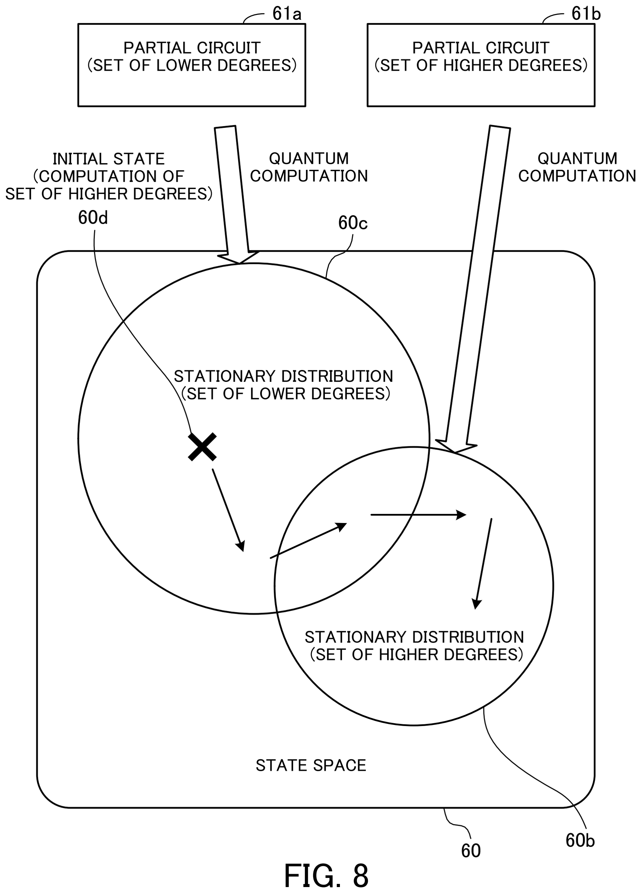

FIG. 8 depicts one example of an initial state set by a stationary distribution of a set of lower degrees. For example, the quantum computing system 300 performs polynomial expansion of a physical quantity and generates a plurality of sets of degrees. The quantum computing system 300 then executes the partial circuits 61a and 61b corresponding to the respective sets of degrees in ascending order of degree.

When quantum computation of the partial circuit 61a corresponding to the lower-degree set has been executed, a stationary distribution 60c of the lower-degree set is obtained. When quantum computation of the partial circuit 61b corresponding to the next higher-degree set is executed, an initial state 60d is determined from the stationary distribution 60c of the lower-degree set. By repeatedly executing quantum computation of the partial circuit 61b using the initial state 60d as the first input state, a stationary distribution 60b of the set of higher degrees is obtained. It is generally expected that a range containing the major contribution of the stationary distribution 60b of a set of higher degrees will be narrower than a range containing the major contribution of the stationary distributions 60c of a set of lower degrees.

In this way, by using the stationary distribution 60c for a lower-degree set in place of a uniform distribution as the initial distribution, the possibility of selecting a state far from the stationary distribution as the initial state 60d when executing the partial circuit 61b of a higher-degree set is reduced.

That is, the stationary distributions 60b and 60c of the set of lower degrees and the set of higher degrees are expected to have a certain degree of overlap. This means that selecting the initial state 60d of the quantum computation corresponding to the set of higher degrees from the stationary distribution 60c of the set of lower degrees suppresses states that are far away from the stationary distribution 60b of the higher-degree set from becoming the initial state 60d. As a result, the states converge in a short time, which improves computational efficiency.

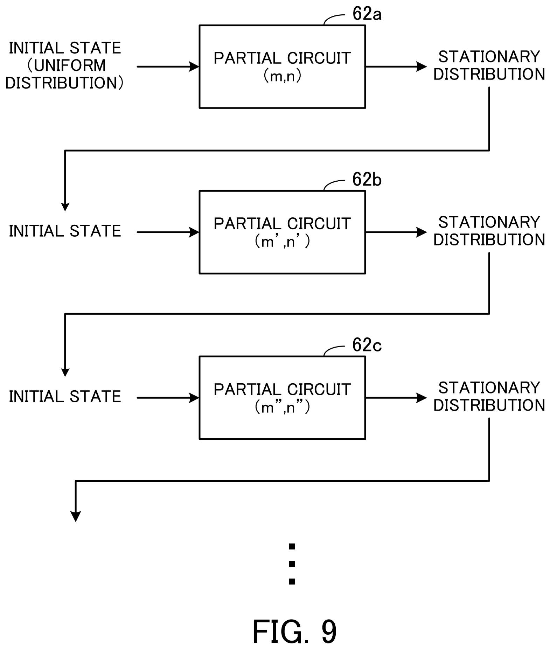

FIG. 9 depicts one example of a method of determining an initial state in a case where partial circuits are sequentially executed from a partial circuit corresponding to a set of lower degrees. In the quantum computing system 300, the partial circuits 62a, 62b, 62c, ... for each set of degrees are generated in the classical computer 100, and such partial circuits 62a, 62b, 62c, ... are executed in the quantum computer 200 in accordance with instructions from the classical computer 100.

[Step 1] First, the classical computer 100 obtains the number of sets of degrees to be used for computation. As one example, the classical computer 100 determines the number of sets of degrees to be used for computation from the desired accuracy or the like using Hoeffding's inequality.

[Step 2] The classical computer 100 extracts a number of sets of degrees that is equal to the number obtained in Step 1 in accordance with a probability distribution that is proportional to the weight of the expansion coefficient of the imaginary time evolution.

[Step 3] The classical computer 100 arranges the sets of degrees extracted in Step 2 in order. In more detail, the classical computer 100 defines a relationship between the magnitudes of the sets of degrees (m, n) and (m', n') (where $m \le n$ and $m' \le n'$) so that as one example, when $m \le m'$ or (m = m' and $n \le n'$), then $(m, n) \le (m', n')$. The classical computer 100 then arranges the sets of degrees in ascending order. This order is referred to as "lexicographic order".

[Step 4] The classical computer 100 generates partial circuits 62a, 62b, 62c, ... corresponding to the sets of degrees in accordance with the order assigned in Step 3. The classical computer 100 also causes the quantum computer 200 to repeatedly perform execution of the generated partial circuits 62a, 62b, 62c, ... and projective measurement on the output states and generates a statistical ensemble based on the results of the projective measurement.

In step 4, for the partial circuit 62a of the set that comes first in the order, the classical computer 100 sets the initial distribution (initial state) of the input state to a uniform distribution. For the partial circuits 62b, 62c, ... of the sets that come second and subsequently in the order, the classical computer 100 sets the initial distribution of the input state to the stationary distribution of the set of degrees calculated immediately before.

In this way, for the partial circuits 62b, 62c, ... corresponding to the second and subsequent sets of degrees, computation commences with a state in the stationary distribution of the immediately previous set of degrees as the initial state. As a result, the initial state is prevented from being too far from the stationary distribution, which shortens the time until the state converges.

Also, by using the stationary distribution of the immediately preceding set of degrees, a stationary distribution which is expected to largely overlap the stationary distribution of the set of degrees to be calculated is used as the initial state. It can be understood from the similarity of the partial circuits corresponding to the sets of degrees that the stationary distributions of the immediately preceding set of degrees and the set of degrees to be calculated will largely overlap.

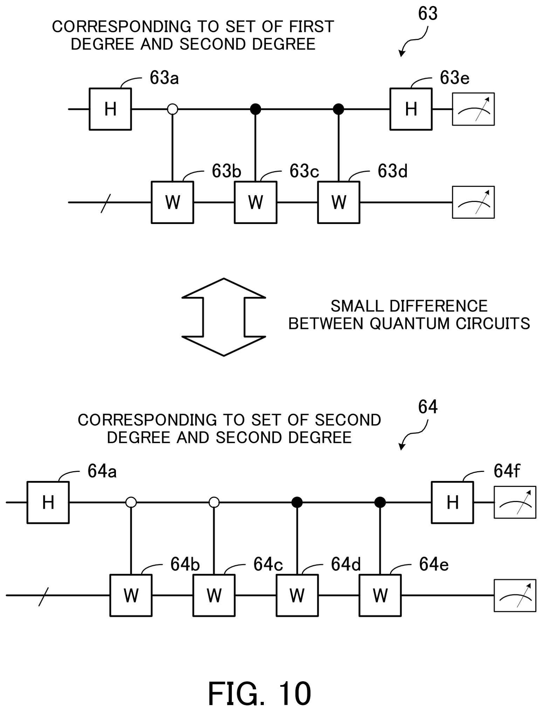

FIG. 10 depicts examples of partial circuits corresponding to sets of degrees. FIG. 10 depicts a partial circuit 63 corresponding to a set of the first degree and the second degree and a partial circuit 64 corresponding to a set of the second degree and the second degree.

In the partial circuit 63, a Hadamard gate is first disposed for the ancilla qubit 63a. Following this, unitary gates 63b to 63d having a basic structure represented by a matrix "W" are disposed for the qubits of the system of interest. The unitary gate 63b has negative polarity (indicating that the gates operates when the ancilla qubit 63a is "0"), and the unitary gates 63c and 63d have positive polarity (indicating that the gates operate when the ancilla qubit 63a is "1"). Finally, a Hadamard gate 63e is disposed for the ancilla qubit.

In the partial circuit 64, a Hadamard gate is first disposed for the ancilla qubit 64a. Following this, unitary gates 64b to 64e represented by the predetermined matrix "W" are disposed for the qubits of the system of interest. The unitary gates 64b and 64c have negative polarity and the unitary gates 64d and 64e have positive polarity. Finally, a Hadamard gate 64f is disposed for the ancilla qubit.

As described above, in the partial circuit corresponding to the set of the $m^{th}$ degree and the $n^{th}$ degree, predetermined unitary gates operate m times under the condition that the ancilla qubit is in the "0" state, and predetermined unitary gates operate n times under the condition that the ancilla qubit is in the "1" state. This means that when two arbitrary partial circuits are compared, the number of unitary gates in the basic structure will differ by the difference between the values of m+n in the set of degrees.

When the sum of the values (m+n) of the degrees is compared for the corresponding sets of degrees of the partial circuit 63 and the partial circuit 64, the difference is "1". For this reason, in the partial circuit 63 and the partial circuit 64, the number of control gates in the basic structure differs by one.

When there are two partial circuits corresponding to a set of degrees in this manner, the smaller the difference between the degrees, the smaller the difference between the partial circuits. When the circuit structures of the partial circuits are similar, the stationary distributions obtained from the partial circuits will also be similar. That is, when there are two sets of degrees and the difference between the degrees is small, the region where the stationary distributions overlap each other will be large.

Next, the functions of the quantum computing system 300 for calculating a thermal-equilibrium expectation value at a finite temperature using MCMC-SPU to which the initial state determination method depicted in FIG. 9 has been applied will be described in more detail.

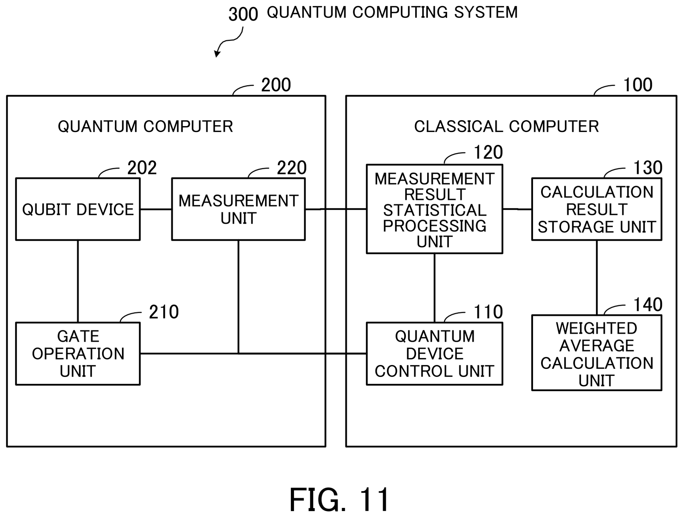

FIG. 11 is a block diagram depicting example functions of a quantum computing system. The quantum computer 200 includes the gate operation unit 210 that performs gate operations of qubits in the qubit device 202 and a measurement unit 220 that performs projective measurement of states of the qubits.

The gate operation unit 210 performs gate operations on qubits according to gate operation instructions from the classical computer 100. As one example, the gate operation unit 210 irradiates a qubit with microwaves corresponding to the quantum gate that is to operate.

The measurement unit 220 is an apparatus that measures the states of qubits in the qubit device 202. As one example, the measurement unit 220 irradiates a qubit to be measured with microwaves and performs projective measurement in the computational basis (or "Z basis").

The classical computer 100 includes a quantum device control unit 110, a measurement result statistical processing unit 120, a calculation result storage unit 130, and a weighted average calculation unit 140.

The quantum device control unit 110 controls the qubit device 202 based on a quantum circuit indicating a quantum computation procedure. As one example, the quantum device control unit 110 controls the qubit device 202 according to a quantum circuit for calculating a finite temperature expectation value of a physical quantity (that is, a partial circuit for each set of degrees obtained by polynomial expansion of an imaginary time evolution).

The measurement result statistical processing unit 120 performs statistical processing of the measurement results of quantum circuits. As one example, the measurement result statistical processing unit 120 calculates an average or a standard deviation of measurement results obtained by a plurality of measurements, and determines whether the measurement results have converged.

The calculation result storage unit 130 stores a calculation result of the physical quantity calculated by each partial circuit. As one example, the calculation result storage unit 130 is part of a storage area of the memory 102 or the storage apparatus 103.

The weighted average calculation unit 140 calculates a weighted average of the calculation results for each partial circuit. The weighted average calculation unit 140 outputs the calculated weighted average as a finite temperature expectation value.

The quantum computing system 300 with the functions described above efficiently calculates the finite temperature expectation value.

Note that as one example, the function of each element depicted in FIG. 11 may be implemented by causing the processor 101 to execute a program module corresponding to that element.

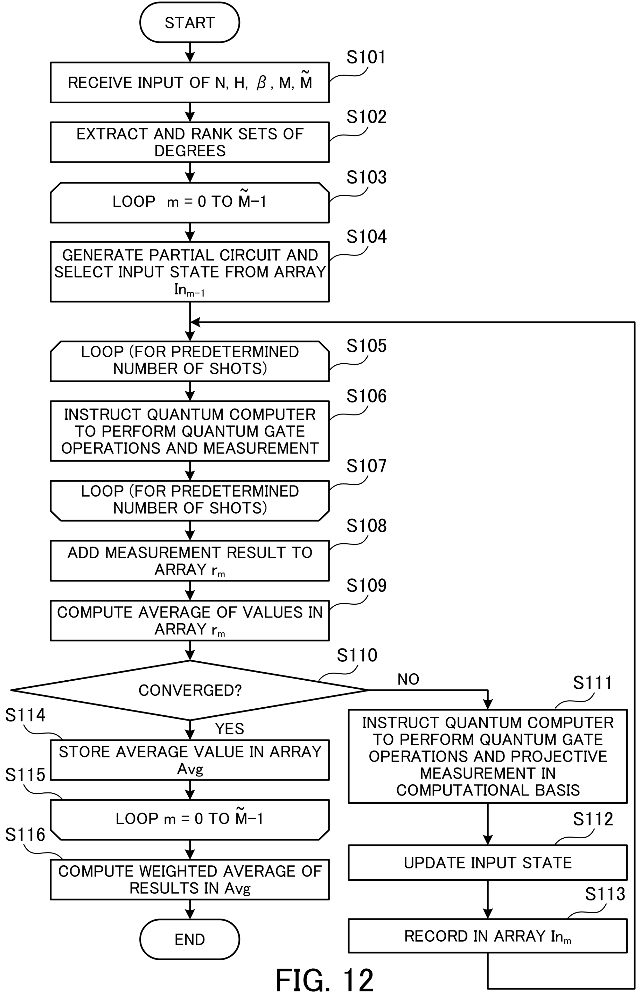

FIG. 12 is a flowchart depicting an example calculation procedure of a finite temperature expectation value. The processing depicted in FIG. 12 is described below in order of the step numbers.

[Step S101] The quantum device control unit 110 of the classical computer 100 receives inputs of the number of qubits N in the system of interest, the Hamiltonian H, the inverse temperature $\beta$, the truncation degree M of the polynomial expansion, and the number $\tilde{M}$ of sets of degrees of polynomials to be extracted.

[Step S102] The quantum device control unit 110 performs polynomial expansion of an imaginary time evolution, and extracts $\tilde{M}$ sets of degrees from the degrees of terms included in the expanded expression. As one example, the quantum device control unit 110 performs polynomial expansion of the expression of imaginary time evolution up to the truncation degree M. As a result, polynomials of the $0^{th}$ degree to the $M^{th}$ degree are generated. The quantum device control unit 110 extracts a set of two degrees from the $0^{th}$ degree to the $M^{th}$ degree by allowing repeated extraction of degrees that have already been extracted. By repeating this process $\tilde{M}$ times, $\tilde{M}$ sets of degrees are generated. The quantum device control unit 110 ranks the extracted sets of degrees in ascending order of the sum of the degrees.

[Step S103] The classical computer 100 repeats the processing of steps S104 to S114 while incrementing the value of m until the loop variable m changes from "0" to "$\tilde{M}-1$".

[Step S104] The quantum device control unit 110 generates a partial circuit corresponding to the extracted $m^{th}$ set of degrees. For example, the quantum device control unit 110 generates unitary gates indicating a procedure of quantum computation of a polynomial corresponding to the respective degrees included in the set. The number of qubits operated by the generated unitary gates is N. The quantum device control unit 110 then generates a partial circuit including two unitary gates corresponding to the set of degrees as illustrated in FIG. 5.

After this, the quantum device control unit 110 selects the input state of the generated partial circuit from an array $In_{m-1}$. As one example, when the quantum device control unit 110 has acquired a data string (the array $In_{m-1}$) after reaching a stationary distribution for a lower set of degrees, the quantum device control unit 110 sets the number of data included in the acquired data string to $N_{data}$ and randomly extracts $N_{data}$ or fewer natural numbers according to a uniform distribution. The quantum device control unit 110 then selects a state labeled with a randomly extracted natural number$^{th}$ element from the computational basis, and sets the selected state as an initial state to be inputted into the quantum circuit corresponding to the next higher set of degrees. Through this procedure, the initial state is selected according to a stationary distribution corresponding to a lower set of degrees.

[Step S105] The quantum device control unit 110 repeatedly executes the processing in step S106 for a generated partial circuit by a predetermined number of shots (a number of iterations).

[Step S106] The quantum device control unit 110 instructs the quantum computer 200 to perform gate operations and measurement according to the generated partial circuit. As one example, the quantum device control unit 110 transmits control signals for gate operations or measurement to the gate operation unit 210 or the measurement unit 220 in an order indicated in the partial circuits. Accordingly, gate operations on qubits are performed by the gate operation unit 210 and the states of the qubits after the gate operations are measured by the measurement unit 220.

Note that the quantum device control unit 110 sets the input state selected in step S104 as the input state to the partial circuit generated in the first calculation of the physical quantity. The quantum device control unit 110 sets the state updated in step S112, described later, as the input state of the generated partial circuit in the second and subsequent calculations of the physical quantity (the iterative processing after steps S111 to S113).

The gate operation unit 210 performs gate operations on qubits according to control signals from the quantum device control unit 110. When the gate operations according to the partial circuit are completed, the states of the qubits of the system of interest and the ancilla qubits are measured by the measurement unit 220. The measurement unit 220 transmits the measurement result to the classical computer 100. In the classical computer 100, the measurement result statistical processing unit 120 receives the measurement result.

[Step S107] When the quantum gate operations and the measurement instructions in step S106 have been completed for predetermined number of shots, the quantum device control unit 110 advances the processing to step S108.

[Step S108] The measurement result statistical processing unit 120 calculates a physical quantity ($\langle\varphi_{ab}^{ik}|O|\varphi_{ab}^{ik}\rangle$ indicated on the right side of Equation (1)) obtained from the measurement results of the generated partial circuit based on the measurement results for the number of shots. The measurement result statistical processing unit 120 adds the calculated physical quantity to the array $r_m$.

[Step S109] The measurement result statistical processing unit 120 calculates the average of the values in the array $r_m$.

[Step S110] The measurement result statistical processing unit 120 determines whether the physical quantity obtained by quantum calculation by the generated partial circuit has converged. As one example, when a change in the average calculated in step S109 is equal to or less than a predetermined value, the measurement result statistical processing unit 120 determines that the average has converged. In addition, the measurement result statistical processing unit 120 may determine that convergence has occurred when the standard deviation of the values in the array $r_m$ is equal to or less than a predetermined value. When convergence has been achieved, the measurement result statistical processing unit 120 advances the processing to step S114. When the measurement results have not converged, the measurement result statistical processing unit 120 advances the processing to step S111.

[Step S111] The quantum device control unit 110 instructs the quantum computer 200 to perform quantum gate operations based on the generated partial circuit and projective measurement in the computational basis. When doing so, the input state of the qubits of the system of interest is the input state at the time of the quantum computation for the immediately preceding calculation of the physical quantity (that is, the quantum gate operations in step S106).

In the quantum computer 200, gate operations are performed at the qubit device 202 in accordance with an instruction from the quantum device control unit 110. The measurement unit 220 then performs projective measurement in the computational basis of the qubits of the system of interest after the gate operations according to the partial circuit. The gate operations according to the partial circuit and the projective measurement are iteratively executed for a predetermined number of shots. The result of one projective measurement is represented by a bit string in which a number of measurement results ($|0\rangle$ or $|1\rangle$) of qubits corresponding to the number of qubits in the system of interest are arranged. The bit string is a data unit, and a data string indicating a result of each projective measurement, which is iteratively executed, is outputted from the quantum computer 200 as the measurement result.

[Step S112] The quantum device control unit 110 updates the input state of the next quantum calculation based on the measurement result acquired in step S111. As one example, the quantum device control unit 110 sets one piece of data (a bit string of $|0\rangle$ or $|1\rangle$) out of the data string indicated in the measurement result of each qubit of the system of interest as an input state of the next calculation of the physical quantity.

By doing so, a computational basis produced by projective measurement of an output state is used as the input state of qubits of the system of interest in the next quantum calculation of the physical quantity. This updating of the input state is repeated until the calculated physical quantity converges.

[Step S113] The quantum device control unit 110 records the measurement result (data string) acquired in step S111 in the array $In_m$. When the computation result has converged as a result of the quantum computation of steps S105 to S107 using the input state updated in step S112, the input state of the quantum computation of a partial circuit corresponding to the $(m+1)^{th}$ set of degrees is selected from the array $In_m$ recorded in step S113.

After step S113, the quantum device control unit 110 advances the processing to step S105.

[Step S114] When the physical quantity has converged, the measurement result statistical processing unit 120 stores the average value calculated in step S109 in the array Avg in the calculation result storage unit 130.

[Step S115] When the processing in steps S104 to S114 has been completed for $\tilde{M}$ sets of degrees, the quantum device control unit 110 advances the processing to step S116.

[Step S116] The weighted average calculation unit 140 calculates a weighted average of the contributions of the partial circuits. As one example, the weighted average calculation unit 140 calculates $\langle O \rangle_\beta$ according to Equation (3). The weighted average calculation unit 140 outputs the calculation result of the weighted average as an expectation value at a finite temperature.

By doing so, it is possible to compute an expectation value of a physical quantity at a finite temperature based on the calculation results of quantum calculation according to a plurality of partial circuits by the quantum computer 200. When doing so, a stationary distribution obtained as the calculation result of quantum calculation of a partial circuit corresponding to a lower set of degrees is used as the initial distribution in the quantum calculation of a partial circuit corresponding to a higher set of degrees. As a result, the calculation result of the quantum calculation of the partial circuit corresponding to the higher set of degrees will efficiently converge to a stationary distribution. Note that the partial circuit is smaller in scale and shallower in circuit depth than the quantum circuit 30 depicted in FIG. 4. This makes it possible for such partial circuits to be executed even by early-stage FTQC.

In addition, in the iterative calculation until a physical quantity obtained using a certain partial circuit converges, the classical computer 100 sets the result of projective measurement in the computational basis of the output state after the quantum calculation by the partial circuit as the input state in the next calculation of the physical quantity. By doing so, the input state to the partial circuit is a statistical ensemble that is suited to that partial circuit.

In more specific terms, obtaining a statistical ensemble suited to a partial circuit means that "$|\Phi_{ab}^{ik}\rangle$" is obtained according to a probability distribution "$W_{ab}^{ik}/\Sigma_j W_{ab}^{jk}$". To obtain such a statistical ensemble efficiently, a state obtained as a projective measurement result in a computational basis of an output state of a partial circuit is used as a next input state. This means that in an iterative cycle of "1. Selection of input state", "2. Partial imaginary time evolution (Contributions of components of a set of degrees)", "3. Measurement of physical quantity", and "4. Measurement of output state", the measurement result of "4. Measurement of output state" becomes the input state of the next cycle. This processing is similar to the METTS algorithm, so that the input state in the iterative cycles undergoes a stochastic transition and the stationary distribution obtained by convergence becomes a statistical ensemble suited to a partial circuit.

The action of each partial circuit is a partial contribution of an imaginary time evolution represented by polynomials corresponding to the extracted sets of degrees. The physical quantity after convergence of each partial circuit indicates the contribution of that partial circuit to the thermal-equilibrium expectation value of the physical quantity in the system of interest. For this reason, the final thermal-equilibrium expectation value of the physical quantity in the system of interest is obtained by finding a weighted average of the calculation results of the physical quantity produced by the plurality of partial circuits.

Next, an example calculation of the thermal-equilibrium expectation value of a physical quantity using a transverse magnetic field Ising model will be described in detail.

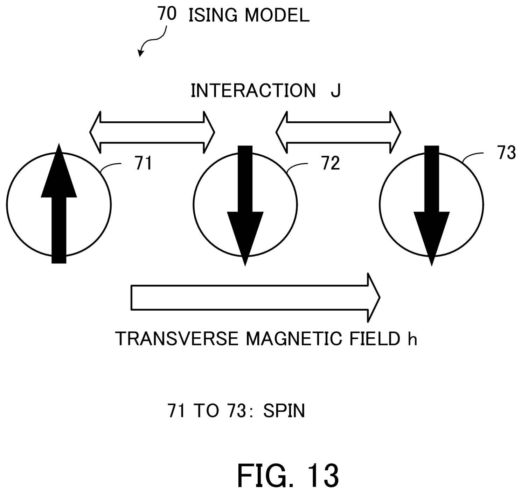

FIG. 13 depicts one example of an Ising model. The Ising model 70 is a theoretical model describing quantum mechanical behavior of a magnetic material. In the Ising model 70, sites 71 to 73 are provided on lattice points. Spin is defined at the sites 71 to 73. Interaction occurs between adjacent spins. Using the Ising model 70, the spin directions at the sites 71 to 73 when a transverse magnetic field is applied may be calculated by numerical simulation.

As one example, the Hamiltonian H of the Ising model 70 is expressed by Equation (5) below.

$$H = J \sum_{\langle i,j \rangle} X_i X_j + h \sum_i Z_i \qquad (5)$$

$X_i$ is a Pauli operator describing an X-direction component of spin at the $i^{th}$ (where i is a natural number) site. $X_j$ is a Pauli operator describing an X-direction component of spin at the $j^{th}$ (where j is a natural number) site. $Z_i$ is a Pauli operator describing the Z-direction component of spin at the $i^{th}$ site. J is a parameter (real number) indicating the Ising interaction. h is a parameter (real number) indicating the transverse magnetic field.

It is possible to obtain a thermal-equilibrium expectation value of energy in the system of interest by representing the system of interest using the Ising model 70. As one example, the thermal-equilibrium expectation value of energy is obtained as a canonical average of eigenvalues of the Hamiltonian H of the Ising model 70.

Here, the system of interest is assumed to be an 8-qubit system. The coefficients of the Hamiltonian are set as follows:

$$J = \frac{\cos^2 \theta}{8} \qquad (6)$$

$$h = \frac{\sin^2 \theta}{8} \qquad (7)$$

$$\theta = \frac{\pi}{8} \qquad (8)$$

The criterion for determining convergence to a stationary distribution is the time at which a result of calculating a Gelman-Rubin statistic for data strings generated from different initial states falls below "1.1". The truncation degree of Chebyshev polynomial expansion is assumed to be the third degree.

The quantum computing system 300 obtains a stationary distribution for a combination of the second degree and the second degree in advance. Assuming that the initial distribution at that time follows a uniform distribution, the quantum computing system 300 selects two typical states as initial states.

The quantum computing system 300 next obtains a stationary distribution for a combination of the second degree and the third degree. At this time, the quantum computing system 300 executes a calculation using the stationary distribution for the combination of the second degree and the second degree obtained above as the initial distribution and a calculation using a uniform distribution as the initial distribution, and compares the calculation results.

The results of comparing the number of steps needed for convergence to a stationary distribution when the quantum computing system 300 is caused to execute computation under such conditions are indicated below. Note that "one step" here refers one iteration of the iterative process of steps S105 to S113 depicted in FIG. 12.

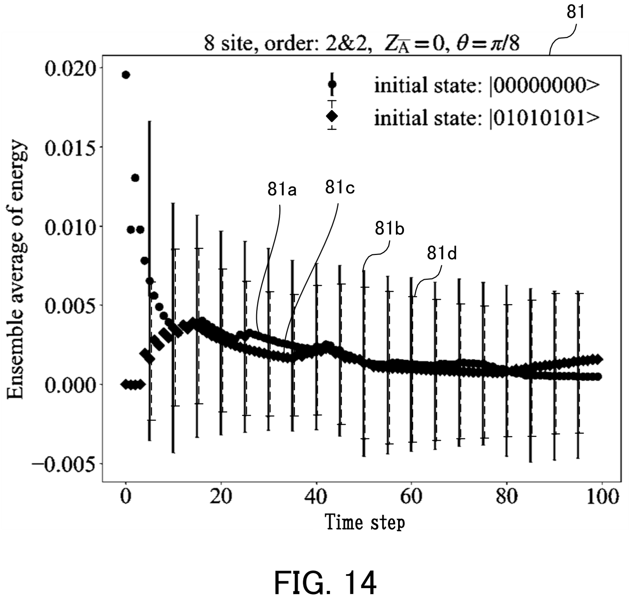

FIG. 14 depicts one example of convergence to a stationary distribution obtained for a set of the second degree and the second degree. A graph 81 depicts changes in energy obtained from measurement results when execution of a partial circuit and projective measurement are repeated. The horizontal axis of the graph 81 represents the number of iterations, and the vertical axis represents energy. The initial input state is selected from the following two computational bases.

|00000000⟩state
|01010101⟩state

Plotted circles 81a indicate average values (expectation values) of energy obtained by executing a partial circuit up to the number of iterations indicated by the value on the horizontal axis when calculation commences with the input state set at $|00000000\rangle$. Solid vertical lines 81b indicate the standard deviation of energy obtained by executing the partial circuit up to the number of iterations indicated by the value on the horizontal axis when the calculation commences with the input state set at $|00000000\rangle$.

Plotted rectangles 81c indicate average values (expectation values) of energy obtained by executing a partial circuit up to the number of iterations indicated by the value on the horizontal axis when calculation commences with the input state set at $|01010101\rangle$. Broken vertical lines 81d indicate the standard deviation of energy obtained by executing the partial circuit up to the number of iterations indicated by the value on the horizontal axis when the calculation commences with the input state set at $|01010101\rangle$.

When the calculation commences from a different initial state and the expectation value and the variance become statistically close to each other, it is possible to determine that the stationary distribution has converged. For the example depicted in the graph 81, as a result of numerical calculation, it is determined that convergence is achieved in 30 steps.

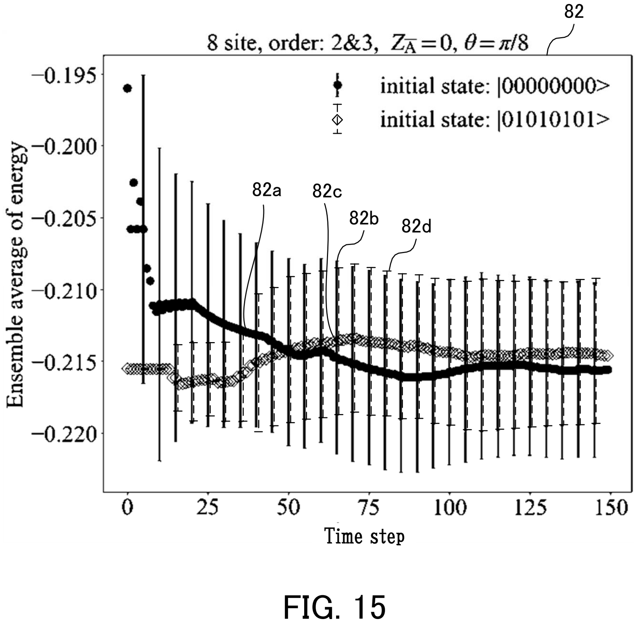

FIG. 15 depicts one example of convergence to a stationary distribution obtained for a set of the second degree and third degree without using a stationary distribution of another set of degrees. A graph 82 depicts changes in energy obtained from measurement results when execution of a partial circuit and projective measurement are repeated. The horizontal axis of the graph 82 represents the number of iterations, and the vertical axis represents energy. The initial input state is selected from the following two computational bases.

$|00000000\rangle$ state
$|01010101\rangle$ state

Plotted circles 82a indicate average values (expectation values) of energy obtained by executing a partial circuit up to the number of iterations indicated by the value on the horizontal axis when calculation commences with the input state set at $|00000000\rangle$. Solid vertical lines 82b indicate the standard deviation of energy obtained by executing the partial circuit up to the number of iterations indicated by the value on the horizontal axis when the calculation commences with the input state set at $|00000000\rangle$.

Plotted rectangles 82c indicate average values (expectation values) of energy obtained by executing a partial circuit up to the number of iterations indicated by the value on the horizontal axis when calculation commences with the input state set at $|01010101\rangle$. Broken vertical lines 82d indicate the standard deviation of energy obtained by executing the partial circuit up to the number of iterations indicated by the value on the horizontal axis when the calculation commences with the input state set at $|01010101\rangle$.

As a result of determining convergence for the calculation results depicted in the graph 82 under the same conditions as in the example in FIG. 14, it is determined that convergence is achieved in 90 steps.

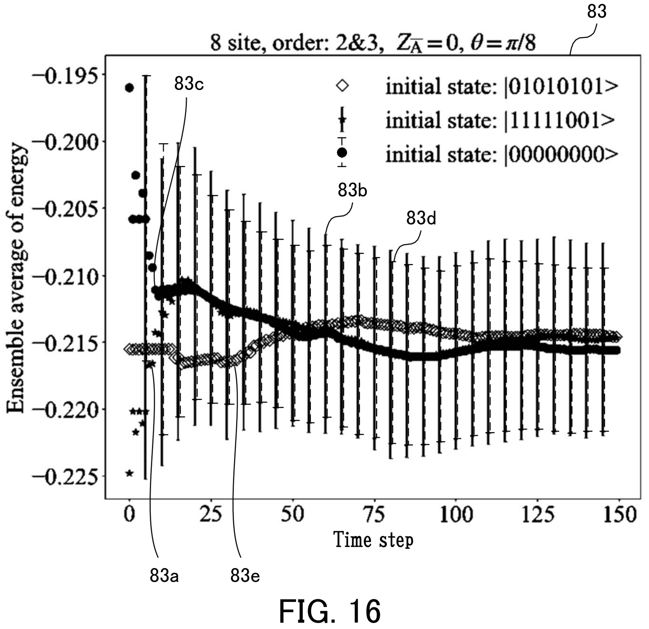

FIG. 16 depicts one example of convergence to a stationary distribution obtained for a set of the second degree and the third degree using a stationary distribution of a set of the second degree and the second degree. A graph 83 depicts changes in energy obtained from measurement results when execution of a partial circuit and projective measurement are repeated. The horizontal axis of the graph 83 represents the number of iterations, and the vertical axis represents energy. In the example in FIG. 16, the following state is selected as the input state from the stationary distribution of the set of the second degree and the second degree.
$|11111001\rangle$ state

The graph 83 also depicts the calculation results for when the following two states are set as input states to determine convergence.

$|00000000\rangle$ state
$|01010101\rangle$ state

Plotted stars 83a indicate average values (expectation values) of energy obtained by executing a partial circuit up to the number of iterations indicated by the value on the horizontal axis when calculation commences with the input state set at $|11111001\rangle$. Solid vertical lines 83b indicate the standard deviation of energy obtained by executing the partial circuit up to the number of iterations indicated by the value on the horizontal axis when the calculation commences with the input state set at $|11111001\rangle$.

Plotted circles 83c indicate average values (expectation values) of energy obtained by executing a partial circuit up to the number of iterations indicated by the value on the horizontal axis when calculation commences with the input state set at $|00000000\rangle$. Broken vertical lines 83d indicate the standard deviation of energy obtained by executing the partial circuit up to the number of iterations indicated by the value on the horizontal axis when the calculation commences with the input state set at $|00000000\rangle$.

Plotted rectangles 83e indicate average values (expectation values) of energy obtained by execution of the partial circuit up to the number of iterations indicated as the value on the horizontal axis when calculation commences with the input state set at $|01010101\rangle$.

As a result of determining convergence for the calculation results depicted in the graph 83 under the same conditions as in the example of FIG. 14, it is determined that convergence is achieved in 40 steps. That is, by selecting the first input state from the stationary distribution of the set of the second degree and the second degree, the speed of convergence is about twice as fast as that in the case where the initial state is selected from the uniform distribution depicted in FIG. 15.

As described above, when performing calculation based on distributed processing of a finite temperature expectation value of a physical quantity, an initial distribution for efficiently generating a statistical ensemble corresponding to a partial circuit from which a higher-degree component is extracted is selected from the stationary distribution of a lower-degree set, which makes the processing efficient. In addition, the partial circuits are executable even by a medium-scale quantum computer, and it is possible to efficiently execute calculation in a low-temperature region, where the contribution of higher-degree components is important.

As one example, when a thermal-equilibrium expectation value of energy at a finite temperature in a transverse magnetic field Ising model is calculated, by using a stationary distribution for a set of the second degree and the second degree as the initial distribution for obtaining a stationary distribution of a set of the second degree and the third degree, convergence is twice as fast as in a case where a stationary distribution is not used. This means that when it is desirable to compute an energy expectation value at a certain temperature, it is possible to reduce the number of sampling iterations without deterioration in accuracy.

[Other Embodiments]

Although example calculation of a thermal-equilibrium expectation value of energy by the transverse magnetic field Ising model has been described as an example in the second embodiment, it is also possible to efficiently calculate thermal-equilibrium expectation values of other physical quantities at a finite temperature.

Although the embodiments have been described above, the configuration of each unit described in the embodiments may be replaced with another unit having the same function. In addition, any other components or processes may be added. Furthermore, any two or more configurations (features) of the above-described embodiments may be combined.

According to one aspect, the calculation efficiency of a thermal-equilibrium expectation value of a physical quantity at a finite temperature is improved.

In any of the above aspects, various features may be implemented in hardware, or as software modules running on one or more processors/computers. The invention also provides a computer program or a computer program product comprising instructions which, when executed by a computer, cause the computer to carry out various method steps described herein, and a non-transitory computer-readable medium comprising instructions which, when executed by a computer, cause the computer to carry out various method steps described herein. A computer program embodying the invention may be stored on a non-transitory computer-readable medium, or it could, for example, be in the form of a signal such as a downloadable data signal provided from an Internet website, or it could be in any other form.

**Claims**

1. A computer program that causes a computer to execute a process comprising:

   expanding an imaginary time evolution equation for calculating a thermal-equilibrium expectation value of a physical quantity at a finite temperature in a calculation target system, into equations of a plurality of degrees;
   generating a plurality of sets of degrees obtained by extracting two degrees from the plurality of degrees;
   generating, for each of the plurality of sets, a quantum circuit indicating a procedure of quantum computation of a value of the physical quantity, the value being obtained by partial imaginary time evolution based on an expression of a first degree included in the set and an expression of a second degree included in the set;
   causing a quantum computer (1) to repeatedly execute, for each of the plurality of sets, the quantum computation based on the corresponding quantum circuit until a value of the physical quantity obtained from a result of the quantum computation converges, wherein, as an input state at a start of quantum computation based on a first quantum circuit (2a) corresponding to at least one first set out of the plurality of sets, a state in a stationary distribution of a measurement result obtained by the quantum computation based on a second quantum circuit (2b) corresponding to a second set that differs from the at least one first set out of the plurality of sets is used; and
   calculating the thermal-equilibrium expectation value of the physical quantity at the finite temperature, based on the values of the physical quantity after convergence for each of the plurality of sets.

2. The computer program according to claim 1,
wherein causing the quantum computer (1) to execute the quantum computation based on the quantum circuits for the plurality of sets includes setting a set of degrees lower than degrees of the at least one first set among the plurality of sets as the second set.

3. The computer program according to claim 1,
wherein causing the quantum computer (1) to execute the quantum computation based on the quantum circuits for the plurality of sets includes ranking the plurality of sets in ascending order of degree, executing the quantum computation based on the quantum circuit for each of the plurality of sets in ascending order of rank, and determining, in response to the first set being ranked $N+1^{th}$, that the set ranked $N^{th}$ is the second set, N being a natural number.

4. The computer program according to claim 1,
wherein causing the quantum computer (1) to execute the quantum computation based on the quantum circuits for the plurality of sets includes causing the quantum computer (1) to repeatedly execute the quantum computation based on the quantum circuit until the value of the physical quantity obtained from the result of the quantum computation converges, wherein an output state after the quantum computation according to the quantum circuit corresponding to a set is used as an input state in a following quantum computation.

5. The computer program according to claim 1,
wherein causing the quantum computer (1) to execute the quantum computation based on the quantum circuits for the plurality of sets includes selecting one state from a plurality of states indicated in a computation result of the quantum computation performed a plurality of times based on the second quantum circuit (2b) after a measurement result of the quantum computation based on the second quantum circuit (2b) has become a stationary distribution, and setting the selected one state as an input state at a start of the quantum computation based on the first quantum circuit (2a) .

6. A quantum computing support method executed by a computer, the quantum computing support method comprising:

    expanding an imaginary time evolution equation for calculating a thermal-equilibrium expectation value of a physical quantity at a finite temperature in a calculation target system, into equations of a plurality of degrees;
    generating a plurality of sets of degrees obtained by extracting two degrees from the plurality of degrees;
    generating, for each of the plurality of sets, a quantum circuit indicating a procedure of quantum computation of a value of the physical quantity, the value being obtained by partial imaginary time evolution based on an expression of a first degree included in the set and an expression of a second degree included in the set;
    causing a quantum computer (1) to repeatedly execute, for each of the plurality of sets, the quantum computation based on the corresponding quantum circuit until a value of the physical quantity obtained from a result of the quantum computation converges, wherein, as an input state at a start of quantum computation based on a first quantum circuit (2a) corresponding to at least one first set out of the plurality of sets, a state in a stationary distribution of a measurement result obtained by the quantum computation based on a second quantum circuit (2b) corresponding to a second set that differs from the at least one first set out of the plurality of sets is used; and
    calculating the thermal-equilibrium expectation value of the physical quantity at the finite temperature, based on the values of the physical quantity after convergence for each of the plurality of sets.

7. An information processing apparatus comprising:
processing means (12) configured to:

    expand an imaginary time evolution equation for calculating a thermal-equilibrium expectation value of a physical quantity at a finite temperature in a calculation target system, into equations of a plurality of degrees;
    generate a plurality of sets of degrees obtained by extracting two degrees from the plurality of degrees;
    generate, for each of the plurality of sets, a quantum circuit indicating a procedure of quantum computation of a value of the physical quantity, the value being obtained by partial imaginary time evolution based on an expression of a first degree included in the set and an expression of a second degree included in the set;
    cause a quantum computer (1) to repeatedly execute, for each of the plurality of sets, the quantum computation based on the corresponding quantum circuit until a value of the physical quantity obtained from a result of the quantum computation converges, wherein, as an input state at a start of quantum computation based on a first quantum circuit (2a) corresponding to at least one first set out of the plurality of sets, a state in a stationary distribution of a measurement result obtained by the quantum computation based on a second quantum circuit (2b) corresponding to a second set that differs from the at least one first set out of the plurality of sets is used; and
    calculate the thermal-equilibrium expectation value of the physical quantity at the finite temperature, based on the values of the physical quantity after convergence for each of the plurality of sets.

10 INFORMATION PROCESSING APPARATUS

12 PROCESSING UNIT

POLYNOMIAL EXPANSION OF IMAGINARY TIME EVOLUTION

$$e^{-\beta H} = \sum_n c_n(\beta) T_n(H)$$  (n: DEGREE)

EXTRACT PLURALITY OF SETS (a,b) OF DEGREES
RANK IN ASCENDING ORDER OF DEGREES

CALCULATION OF PHYSICAL QUANTITY OF CONTRIBUTION OF SET OF LOWER DEGREES

2b SECOND QUANTUM CIRCUIT

$|0\rangle$ — H — U_a U_b — H —

$|\psi\rangle$ — U_a U_b —

STATIONARY DISTRIBUTION

CALCULATION OF PHYSICAL QUANTITY OF CONTRIBUTION OF SET OF HIGHER DEGREES

2a FIRST QUANTUM CIRCUIT

INPUT STATE AT START

$|0\rangle$ — H — U_a U_b — H —

$|\psi\rangle$ — U_a U_b —

STATIONARY DISTRIBUTION

1 QUANTUM COMPUTER

VALUE OF PHYSICAL QUANTITY AFTER CONVERGENCE

COMPUTATION OF THERMAL-EQUILIBRIUM EXPECTATION VALUE AT FINITE TEMPERATURE

3a 3b

VALUE OF PHYSICAL QUANTITY (CONTRIBUTION OF SET OF DEGREES)

11 STORAGE UNIT

FIG. 1

TERMINAL
APPARATUS

400

20

NETWORK

300

QUANTUM
COMPUTING SYSTEM

200

100

QUANTUM
COMPUTER

CLASSICAL
COMPUTER

# FIG. 2

**100** CLASSICAL COMPUTER

**101** PROCESSOR

**104** GRAPHICS CONTROLLER

**21** MONITOR

**102** MEMORY

**105** INPUT INTERFACE

**22** KEYBOARD

**23** MOUSE

**103** STORAGE APPARATUS

**106** OPTICAL DRIVE APPARATUS

**24** OPTICAL DISC

**25** MEMORY APPARATUS

**108** NETWORK INTERFACE

**107** DEVICE CONNECTION INTERFACE

**100a** BUS

**109** COMMUNI- CATION INTERFACE

**26** MEMORY READER/WRITER

**27** MEMORY CARD

**20** NETWORK

**200** QUANTUM COMPUTER

**201** CONTROL APPARATUS

**202** QUBIT DEVICE

FIG. 3

FIG. 4

FIG. 5

FIG. 6

FIG. 7

FIG. 8

FIG. 9

FIG. 10

300 QUANTUM COMPUTING SYSTEM

**200 QUANTUM COMPUTER**

- 202 QUBIT DEVICE
- 220 MEASUREMENT UNIT
- 210 GATE OPERATION UNIT

**100 CLASSICAL COMPUTER**

- 120 MEASUREMENT RESULT STATISTICAL PROCESSING UNIT
- 130 CALCULATION RESULT STORAGE UNIT
- 110 QUANTUM DEVICE CONTROL UNIT
- 140 WEIGHTED AVERAGE CALCULATION UNIT

FIG. 11

START

RECEIVE INPUT OF N, H, $\beta$, M, $\tilde{M}$ — S101

EXTRACT AND RANK SETS OF DEGREES — S102

LOOP m = 0 TO $\tilde{M}-1$ — S103

GENERATE PARTIAL CIRCUIT AND SELECT INPUT STATE FROM ARRAY $In_{m-1}$ — S104

LOOP (FOR PREDETERMINED NUMBER OF SHOTS) — S105

INSTRUCT QUANTUM COMPUTER TO PERFORM QUANTUM GATE OPERATIONS AND MEASUREMENT — S106

LOOP (FOR PREDETERMINED NUMBER OF SHOTS) — S107

ADD MEASUREMENT RESULT TO ARRAY $r_m$ — S108

COMPUTE AVERAGE OF VALUES IN ARRAY $r_m$ — S109

CONVERGED? — S110

NO

INSTRUCT QUANTUM COMPUTER TO PERFORM QUANTUM GATE OPERATIONS AND PROJECTIVE MEASUREMENT IN COMPUTATIONAL BASIS — S111

UPDATE INPUT STATE — S112

RECORD IN ARRAY $In_m$ — S113

YES

STORE AVERAGE VALUE IN ARRAY Avg — S114

LOOP m = 0 TO $\tilde{M}-1$ — S115

COMPUTE WEIGHTED AVERAGE OF RESULTS IN Avg — S116

END

FIG. 12

70 ISING MODEL

INTERACTION J

71

72

73

TRANSVERSE MAGNETIC FIELD h

71 TO 73: SPIN

# FIG. 13

FIG. 14

FIG. 15

FIG. 16

Europäisches
Patentamt

European
Patent Office

Office européen
des brevets

# EUROPEAN SEARCH REPORT

**Application Number**

EP 25 21 3478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | NORIFUMI MATSUMOTO ET AL: "Quantum many-body simulation of finite-temperature systems with sampling a series expansion of a quantum imaginary-time evolution", ARXIV.ORG, CORNELL UNIVERSITY LIBRARY, 201 OLIN LIBRARY CORNELL UNIVERSITY ITHACA, NY 14853, 27 October 2024 (2024-10-27), XP091902431, * abstract * * Section I, III.A * ----- | 1-7 | INV. G06N10/20 G06N10/60 G06N10/40 |
| A | JO\~AO C GETELINA ET AL: "Adaptive variational quantum minimally entangled typical thermal states for finite temperature simulations", ARXIV.ORG, CORNELL UNIVERSITY LIBRARY, 201 OLIN LIBRARY CORNELL UNIVERSITY ITHACA, NY 14853, 4 August 2023 (2023-08-04), XP091579676, * abstract * ----- | 1-7 | |
| A | THAIS DE LIMA SILVA ET AL: "Fragmented imaginary-time evolution for intermediate-scale quantum signal processors", ARXIV.ORG, CORNELL UNIVERSITY LIBRARY, 201 OLIN LIBRARY CORNELL UNIVERSITY ITHACA, NY 14853, 10 January 2022 (2022-01-10), XP091127951, * abstract * ----- | 1-7 | **TECHNICAL FIELDS SEARCHED (IPC)** G06N |

The present search report has been drawn up for all claims

| Place of search | Date of completion of the search | Examiner |
|---|---|---|
| The Hague | 5 March 2026 | Bohn, Patrice |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020090559 A
- JP 2023043100 A
- US 20200057957

### Non-patent literature cited in the description

- **NORIFUMI MATSUMOTO** ; **SHOICHIRO TSUTSUI** ; **YUYA O. NAKAGAWA** ; **YUICHIRO HIDAKA** ; **SHOTA KANASUGI** ; **KAZUNORI MARUYAMA** ; **HIROTAKA OSHIMA** ; **SHINTARO SATO**. Quantum many-body simulation of finite-temperature systems with sampling a series expansion of a quantum imaginary-time evolution. *arXiv:2409.07070v1, quant-ph*, 11 September 2024